# EUROPEAN PATENT APPLICATION

(11) **EP 4 697 698 A1**
(43) Date of publication of application: **18.02.2026**
(21) Application number: 24836145.3
(22) Date of filing: 28.03.2024
(51) Int. Cl.: H04N 13/383, H04N 13/344, H04N 13/139, H04N 13/117, H04N 13/239, G02B 27/01, H04N 13/332

(54) **WEARABLE DEVICE AND METHOD FOR PROCESSING CAMERA IMAGE ON BASIS OF REGION OF INTEREST, AND NON-TRANSITORY COMPUTER-READABLE STORAGE MEDIUM**

(30) Priority: 03.07.2023 KR 20230085893; 31.07.2023 KR 20230100109
(71) Applicant: Samsung Electronics Co., Ltd., Suwon-si, Gyeonggi-do 16677 (KR)
(72) Inventor: YOON, Jongmin, Suwon-si Gyeonggi-do 16677 (KR); YOON, Hyunseung, Suwon-si Gyeonggi-do 16677 (KR); LEE, Byounghee, Suwon-si Gyeonggi-do 16677 (KR); KIM, Kwangtai, Suwon-si Gyeonggi-do 16677 (KR); KIM, Seungnyun, Suwon-si Gyeonggi-do 16677 (KR)
(74) Representative: Nederlandsch Octrooibureau
(86) International application number: PCT/KR2024/003998
(87) International publication number: WO 2025/009694

(57) **Abstract**

A wearable device is provided. The wearable device can identify, on the basis of a user input, a region of interest in a first frame that is output through a display. A camera region included in the first frame can correspond to at least one region of a first camera image acquired through a camera at a first time point. The wearable device can: control, on the basis that the region of interest overlaps the camera region, that an image signal processor processes, through a first processing scheme, a second camera image acquired at a second time point after the first time point; control, on the basis that the region of interest deviates from the camera region, that the image signal processor processes the second camera image through a second processing scheme, which differs from the first processing scheme; and display, through the display, a second frame including the camera region corresponding to at least one region of the processed second camera image.

## Description

### [Technical Field]

The descriptions relate to a wearable device, a method, and a non-transitory computer readable storage medium processing a camera image based on a region of interest (ROI).

### [Background Art]

In order to provide an enhanced user experience, an electronic device that provide an augmented reality (AR) service that displays information generated by a computer in association with an external object in the real-world is being developed. The electronic device may be a wearable device that may be worn by a user. For example, the electronic device may be AR glasses and/or a head-mounted device (HMD).

The above- information is presented as background information only to assist with an understanding of the disclosure. No determination has been made, and no assertion is made, as to whether any of the above might be applicable as a prior art with regard to the disclosure.

### [Disclosure]

### [Technical Solution]

Aspects of the disclosure are to address at least the above-mentioned problems and/or disadvantages and to provide at least the advantages described below. Accordingly, an aspect of the disclosure is to provide a wearable device, a method, and a non-transitory computer readable storage medium processing a camera image based on a region of interest (ROI).

Additional aspects will be set forth in part in the description which follows and, in part, will be apparent from the description, or may be learned by practice of the presented embodiments.

A wearable device is provided. The wearable device may comprise a camera. The wearable device may comprise a display. The wearable device may comprise an image signal processor. The wearable device may comprise at least one processor. The wearable device may comprise memory, comprising one or more storage mediums, storing instructions. The instructions that, when executed by the at least one processor individually or collectively, may cause the wearable device to, based on user input, identify a region of interest (ROI) from a first frame displayed through the display. A camera region included in the first frame may correspond to at least partial region of a first camera image obtained through the camera at a first time point. The instructions that, when executed by the at least one processor individually or collectively, may cause the wearable device to, based on the ROI overlapping the camera region, control the image signal processor to process a second camera image obtained at a second time point after the first time point by a first processing scheme. The instructions that, when executed by the at least one processor individually or collectively, may cause the wearable device to, based on the ROI being outside of the camera region, control the image signal processor to process the second camera image by a second processing scheme that is distinct from the first processing scheme. The instructions that, when executed by the at least one processor individually or collectively, may cause the wearable device to display, through the display, a second frame including the camera region corresponding to at least partial region of the processed second camera image.

A method executed by a wearable device including a camera, and a display is provided. The method may comprise, based on user input, identifying a region of interest (ROI) from a first frame displayed through the display. A camera region included in the first frame may correspond to at least partial region of a first camera image obtained through the camera at a first time point. The method may comprise, based on the ROI overlapping the camera region, processing a second camera image obtained at a second time point after the first time point by a first processing scheme. The method may comprise, based on the ROI being outside of the camera region, processing the second camera image by a second processing scheme that is distinct from the first processing scheme. The method may comprise, displaying, through the display, a second frame including the camera region corresponding to at least partial region of the processed second camera image.

A non-transitory computer readable storage medium is provided. The non-transitory computer readable storage medium may store one or more programs including instructions. The instructions, when executed by a processor of a wearable device including a camera and a display, may be caused to identify a region of interest (ROI) in the first frame outputted through the display based on user input. A camera region included in the first frame may correspond to at least partial region of a first camera image obtained through the camera at a first time point. The instructions, when executed by the processor, may cause the wearable device to, based on the ROI overlapping the camera region, control the image signal processor to process a second camera image obtained at a second time point after the first time point by a first processing scheme. The instructions, when executed by the processor, may cause the wearable device to, based on the ROI being outside of the camera region, control the image signal processor to process the second camera image by a second processing scheme that is distinct from the first processing scheme. The instructions, when executed by the processor, may cause the wearable device to display, through the display, a second frame including the camera region corresponding to at least partial region of the processed second camera image.

A wearable device is provided. The wearable device may comprise a camera. The wearable device may comprise a display. The wearable device may comprise an image signal processor. The wearable device may comprise at least one a processor. The wearable device may comprise memory, comprising one or more storage mediums, storing instructions. The instructions that, when executed by the at least one processor individually or collectively, may cause the wearable device to display, on the display, a first frame, that includes, as a camera region, at least partial region of a first camera image of environment surrounding the wearable device and obtained through the camera at a first time point. The instructions that, when executed by the at least one processor individually or collectively, may cause the wearable device to, during the first frame being displayed on the display, identify the camera region within the frame corresponding to a region of interest (ROI). The instructions that, when executed by the at least one processor individually or collectively, may cause the wearable device to, in response to identifying that data indicating a change of pixel values of the camera region is out of a reference range, control the image signal processor to obtain the camera images for the camera region at a first frame per second (FPS) higher than a second FPS of a region of the frame outside of the camera region. The instructions that, when executed by the at least one processor individually or collectively, may cause the wearable device to, in response to identifying that the data is within the reference range, control the image signal processor to obtain the camera images for the camera region at the second FPS.

A method executed by a wearable device including a camera, and a display is provided. The method may comprise displaying, on the display, a first frame, that includes, as a camera region, at least partial region of a first camera image of environment surrounding the wearable device and obtained through the camera at a first time point. The method may comprise, during the first frame being displayed on the display, identifying the camera region within the frame corresponding to a region of interest (ROI). The method may comprise, in response to identifying that data indicating a change of pixel values of the camera region is out of a reference range, obtaining the camera images for the camera region at a first frame per second (FPS) higher than a second FPS of a region of the frame outside of the camera region. The method may comprise, in response to identifying that the data is within the reference range, obtaining the camera images for the camera region at the second FPS.

A non-transitory computer readable storage medium is provided. The non-transitory computer readable storage medium may store one or more programs including instructions. The instructions, when executed by a processor of a wearable device including a camera and a display, may be configured such that the wearable device identifies a region of interest (ROI) in the first frame outputted through the display based on user input. A camera region included in the first frame may correspond to at least partial region of a first camera image obtained through the camera at a first time point. The instructions, when executed by the processor, may be configured such that the wearable device controls, based on the ROI overlapping the camera region, the image signal processor to process a second camera image obtained at a second time point after the first time point by a first processing scheme. The instructions, when executed by the processor, may be configured such that the wearable device controls, based on the ROI being outside of the camera region, the image signal processor to process the second camera image by a second processing scheme that is distinct from the first processing scheme. The instructions, when executed by the processor, may be configured such that the wearable device displays, through the display, a second frame including the camera region corresponding to at least partial region of the processed second camera image.

Other aspects, advantages, and salient features of the disclosure will become apparent to those skilled in the art from the following detailed description, which, taken in conjunction with the annexed drawings, discloses various embodiments of the disclosure.

### [Description of the Drawings]

The above and other aspects, features, and advantages of certain embodiments of the disclosure will be more apparent from the following description taken in conjunction with the accompanying drawings, in which:
FIG. 1 is a block diagram of an electronic device in a network environment according to an embodiment of the disclosure;
FIG. 2A illustrates exterior of a first surface of a wearable device according to an embodiment of the disclosure;
FIG. 2B illustrates exterior of a second surface of a wearable device according to an embodiment of the disclosure;
FIG. 2C illustrates exterior of a first surface of a wearable device according to an embodiment of the disclosure;
FIG. 2D illustrates exterior of a second surface of a wearable device according to an embodiment of the disclosure;
FIG. 3A is a simplified block diagram of a wearable device according to an embodiment of the disclosure;
FIG. 3B illustrates components for processing a camera image of a wearable device according to an embodiment of the disclosure;
FIG. 4A illustrates a frame displayed based on a camera image of an environment surrounding a wearable device according to an embodiment of the disclosure;
FIG. 4B illustrates a frame displayed based on a camera image of an environment surrounding a wearable device according to an embodiment of the disclosure;
FIG. 4C illustrates a frame displayed based on a camera image of an environment surrounding a wearable device according to an embodiment of the disclosure;
FIG. 4D illustrates a frame displayed based on a camera image of an environment surrounding a wearable device according to an embodiment of the disclosure;
FIG. 5A illustrates a region of interest on a frame according to an embodiment of the disclosure;
FIG. 5B illustrates a region of interest on a frame according to an embodiment of the disclosure;
FIG. 5C illustrates a path processing a camera image according to a region of interest on a frame according to an embodiment of the disclosure;
FIG. 6A illustrates a region of interest on a frame according to an embodiment of the disclosure;
FIG. 6B illustrates a region of interest on a frame according to an embodiment of the disclosure;
FIG. 7A illustrates setting resolution according to a region of interest on a frame according to an embodiment of the disclosure;
FIG. 7B illustrates setting resolution according to a region of interest on a frame according to an embodiment of the disclosure;
FIG. 7C illustrates setting resolution according to a region of interest on a frame according to an embodiment of the disclosure;
FIG. 8A illustrates setting resolution according to a region of interest on a frame according to an embodiment of the disclosure;
FIG. 8B illustrates setting resolution according to a region of interest on a frame according to an embodiment of the disclosure;
FIG. 8C illustrates setting resolution according to a region of interest on a frame according to an embodiment of the disclosure;
FIG. 8D illustrates setting resolution according to a region of interest on a frame according to an embodiment of the disclosure;
FIG. 9A illustrates setting resolution according to a region of interest on a frame according to an embodiment of the disclosure;
FIG. 9B illustrates setting resolution according to a region of interest on a frame according to an embodiment of the disclosure;
FIG. 10A illustrates objects existing in an environment surrounding a wearable device according to an embodiment of the disclosure;
FIG. 10B illustrates a synthesis between a camera image and an application image according to an embodiment of the disclosure;
FIG. 11 is a flowchart of a method executed in a wearable device according to an embodiment of the disclosure; and
FIG. 12 is a flowchart of a method executed in a wearable device according to an embodiment of the disclosure;

Throughout the drawings, it should be noted that like reference numbers are used to depict the same or similar elements, features, and structures.

### [Mode for Invention]

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of a well-known function and a configuration may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

It should be appreciated that the blocks in each flowchart and combinations of the flowcharts may be performed by one or more computer programs which include computer-executable instructions. The entirety of the one or more computer programs may be stored in a single memory device or the one or more computer programs may be divided with different portions stored in different multiple memory devices.

Any of the functions or operations described herein can be processed by one processor or a combination of processors. The one processor or the combination of processors is circuitry performing processing and includes circuitry like an application processor (AP, e.g., a central processing unit (CPU)), a communication processor (CP, e.g., a modem), a graphical processing unit (GPU), a neural processing unit (NPU) (e.g., an artificial intelligence (AI) chip), a wireless-fidelity (Wi-Fi) chip, a Bluetooth^{™} chip, a global positioning system (GPS) chip, a near field communication (NFC) chip, connectivity chips, a sensor controller, a touch controller, a finger-print sensor controller, a display drive integrated circuit (IC), an audio CODEC chip, a universal serial bus (USB) controller, a camera controller, an image processing IC, a microprocessor unit (MPU), a system on chip (SoC), an IC, or the like.

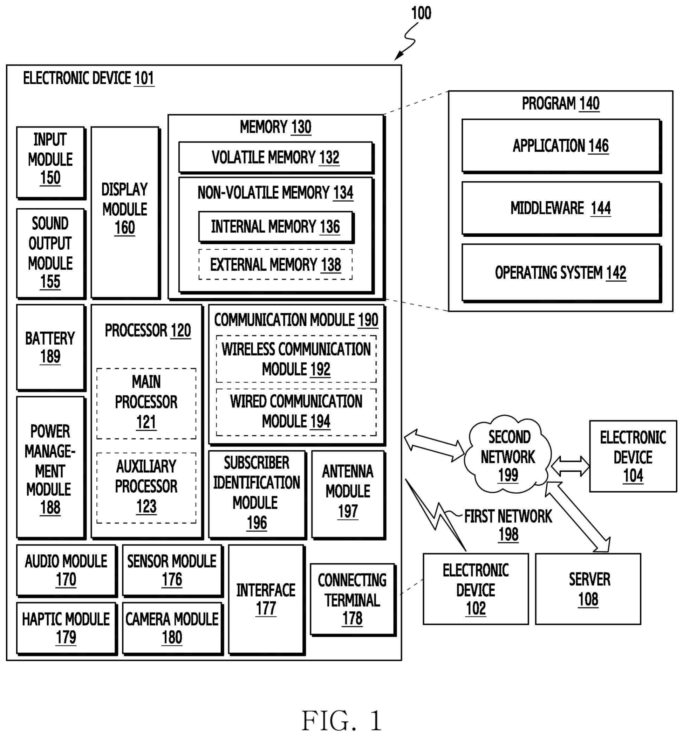

FIG. 1 is a block diagram illustrating an electronic device in a network environment according to an embodiment of the disclosure.

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., the electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter wave (mmWave) band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 gigabits per second (Gbps) or more) for implementing eMBB, loss coverage (e.g., 164dB or less) for implementing mMTC, or U-plane latency (e.g., 0.5 milliseconds (ms) or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element includes a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment , the external electronic device 104 or the server 108 may be included in the second network 199. The electronic device 101 may be applied to intelligent services (e.g., smart home, smart city, smart car, or healthcare) based on 5G communication technology or IoT-related technology.

Each of the external electronic devices 102 and 104 may be the same or different type of device from the electronic device 101. According to an embodiment, all or part of the operations performed in the electronic device 101 may be performed in at least one of the external electronic devices 102 and 104. For example, in case that the electronic device 101 may perform some functions or services, the electronic device 101 may request one or more external electronic devices 102 and 104 to perform at least part of the functions or the services, instead of or in addition to executing the functions or the services by itself. One or more external electronic devices 102 and 104 that have received the request may execute at least part of the requested functions or the requested services, or an additional function or additional service related to the request, and may deliver a result of the execution to the electronic device 101. The electronic device 101 may provide the result as it is or as processed additionally as at least part of a response to the request. For example, the external electronic device 102 may render content data executed by the application 146 and then may transmit the rendered content data to the electronic device 101, and the electronic device 101 may display the rendered content data on the display module 160. When the electronic device 101 may detect user movement through the sensor module 176 (e.g., an inertial measurement unit (IMU) sensor), the processor 120 of the electronic device 101 may correct the rendered content data received from the external electronic device 102 based on the motion information and may display the corrected content data on the display module 160. Alternatively, the processor 120 may request transmit the motion information to the external electronic device 102 and request the external electronic device 102 to render based on the motion information. According to an embodiment, the external electronic device 102 may be various types of devices, including a case device that can store and charge the electronic device 101.

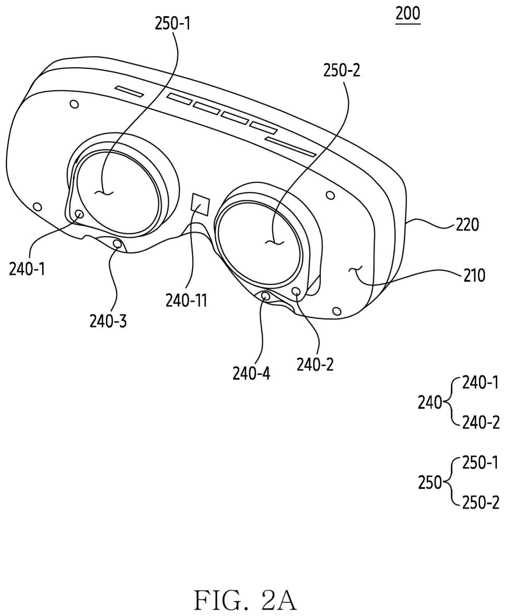

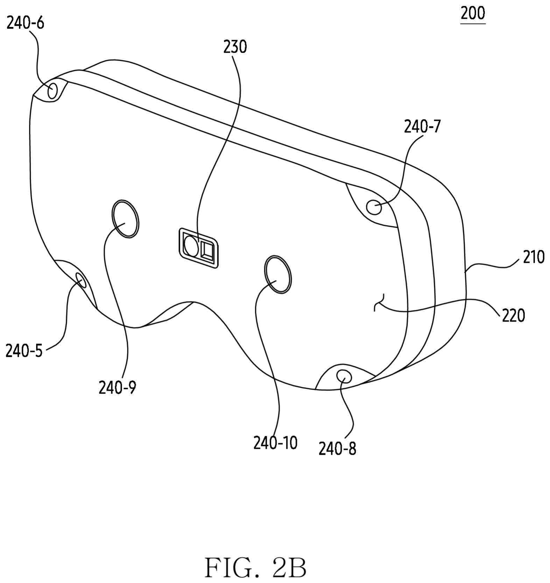

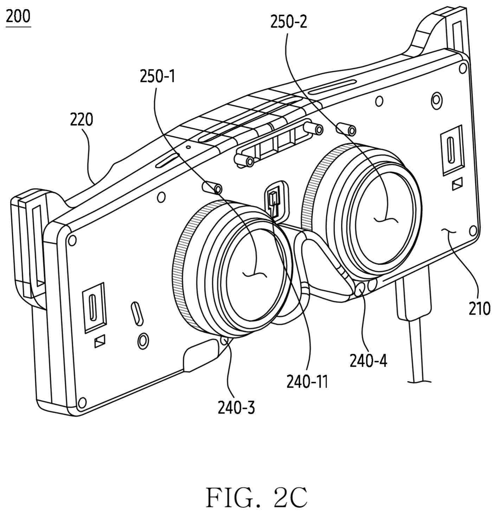

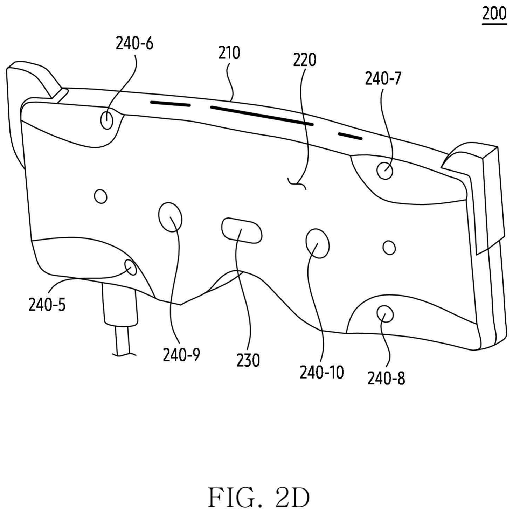

FIG. 2A illustrates exterior of a first surface of a wearable device according to an embodiment of the disclosure. FIG. 2B illustrates exterior of a second surface of a wearable device according to an embodiment of the disclosure. FIG. 2C illustrates exterior of a first surface of a wearable device according to an embodiment of the disclosure. FIG. 2D illustrates exterior of a second surface of a wearable device according to an embodiment of the disclosure.

A wearable device 200 of FIGS. 2A to 2D may be an electronic device 101 described in FIG. 1. An example of an exterior of a first surface 210 of a housing of the wearable device 200 may be illustrated in FIGS. 2A and 2C, and an example of an exterior of a second surface 220 opposite to the first surface 210 may be illustrated in FIGS. 2B and 2D.

Referring to FIGS. 2A and 2C, according to an embodiment, the first surface 210 of the wearable device 200 may have a form attachable to a user's body part (e.g., the user's face). Although not illustrated, the wearable device 200 may further include a strap for fastening on the user's body part, and/or one or more temples.

A first display 250-1 for outputting an image to a left eye among two eyes of the user, and a second display 250-2 for outputting an image to a right eye among the two eyes may be disposed on the first surface 210. The wearable device 200 may further include rubber or silicon packing for preventing interference by light (e.g., ambient light) formed on the first surface 210 and different from light emitted from the first display 250-1 and the second display 250-2.

Each of the first display 250-1 and the second display 250-2 may include at least one of a liquid crystal display (LCD), a digital mirror device (DMD), a liquid crystal on silicon (LCoS), an organic light emitting diode (OLED), or a micro light emitting diode (micro LED).

In case that each of the first display 250-1 and the second display 250-2 is formed of at least one of the liquid crystal display (LCD), the digital mirror device (DMD), and the liquid crystal on silicon (LCoS), the wearable device 200 may include a light source that emits light to a screen output region of each of the first display 250-1 and the second display 250-2.

In case that each of the first display 250-1 and the second display 250-2 may generate the light by itself, the wearable device 200 may not include a separate light source. Here, in case that each of the first display 250-1 and the second display 250-2 is formed of at least one of the organic light emitting diode (OLED) or the micro light emitting diode (micro LED), each of the first display 250-1 and the second display 250-2 may generate light by itself. In an embodiment, when each of the first display 250-1 and the second display 250-2 is implemented as the organic light emitting diode (OLED) or the micro light emitting diode (micro LED), the wearable device 200 may be lightened by weight of the light source.

Each of the first display 250-1 and the second display 250-2 may further include a lens. The lens may adjust focus so that a screen outputted to the first display 250-1 and the second display 250-2 is visible to the user's eyes. For example, the lens may include a Fresnel lens, a pancake lens, or a multi-channel lens.

According to an embodiment, the wearable device 200 may include cameras 240-1 and 240-2 for photographing and/or tracking the two eyes of the user adjacent to each of the first display 250-1 and the second display 250-2. The cameras 240-1 and 240-2 may be referred to as an eye tracking (ET) camera. According to an embodiment, the wearable device 200 may include cameras 240-3, 240-4, and 240-11 for photographing and/or recognizing the user's face. The cameras 240-3, 240-4, and 240-11 may be referred to as a face tracking (FT) camera. The cameras 240-3 and 240-4 may photograph an image used to detect a facial expression of the user wearing the wearable device 200. According to an embodiment, the cameras 240-1, 240-2, 240-3, 240-4, and 240-11 may be a global shutter (GS) camera.

Referring to FIGS. 2B and 2D, a camera (e.g., cameras 240-5, 240-6, 240-7, 240-8, 240-9, and 240-10) for obtaining information related to an external environment of the wearable device 200, and/or a sensor (e.g., a depth sensor 230) may be disposed on the second surface 220 opposite to the first surface 210 of FIGS. 2A and 2C. For example, the cameras 240-5, 240-6, 240-7, 240-8, 240-9, and 240-10 may be disposed on the second surface 220 to recognize an external object different from that of the wearable device 200. For example, by using the cameras 240-9 and 240-10, the wearable device 200 may obtain an image and/or video to be transmitted to each of the user's two eyes. The camera 240-9 may be disposed on the second surface 220 of the wearable device 200 to obtain an image to be displayed through the second display 250-2 corresponding to the right eye among the two eyes. The camera 240-10 may be disposed on the second surface 220 of the wearable device 200 to obtain an image to be displayed through the first display 250-1 corresponding to the left eye among the two eyes.

The cameras 240-5, 240-6, 240-7, and 240-8 may be used for head tracking, hand detection and tracking, and spatial recognition of 3 degrees of freedom (DoF) or 6DoF. The cameras 240-5, 240-6, 240-7, and 240-8 may be a GS camera.

The cameras 240-5, 240-6, 240-7, and 240-8 may be used for spatial recognition for the 6DoF and a simultaneous localization and mapping (SLAM) function through depth photography. In addition, the cameras 240-5, 240-6, 240-7, and 240-8 may be used for a user gesture recognition function.

The cameras 240-9 and 240-10 may be a high resolution camera for high resolution (HR) or photo video (PV). The cameras 240-9 and 240-10 may support an auto focus (AF) function and an image stabilization (IS) (e.g., optical IS (OIS), digital IS (DIS)) function. The cameras 240-9 and 240-10 may be the GS camera. However, it is not limited thereto. The cameras 240-9 and 240-10 may be a rolling shutter (RS) camera.

According to an embodiment, the wearable device 200 may include the depth sensor 230 disposed on the second surface 220 to identify a distance between the wearable device 200 and the external object. By using the depth sensor 230, the wearable device 200 may obtain spatial information (e.g., a depth map) on at least a portion of field of view (FoV) of the user wearing the wearable device 200. The depth sensor 230 may be referred to as a time of flight (TOF) sensor. The TOF may refer to a technique for measuring a distance of an object by using a signal (near infrared, ultrasonic, laser, and the like.).

Although not illustrated, a microphone for obtaining a sound outputted from the external object may be disposed on the second surface 220 of the wearable device 200. The number of microphones may be one or more according to the embodiment.

As described above, according to an embodiment, the wearable device 200 may have a form factor for being worn on the user's head. The wearable device 200 may provide a user experience based on augmented reality, virtual reality, and/or mixed reality in a state worn on the head. By using the cameras 240-5, 240-6, 240-7, 240-8, 240-9, and 240-10 for recording a video about an external space, the wearable device 200 and a server (e.g., a server 108 of FIG. 1) connected to the wearable device 200 may provide an on-demand service that provides a video of a location and/or a place selected by the user and/or a metaverse service.

According to an embodiment, the wearable device 200 may display frames obtained through the cameras 240-9 and 240-10 on each of the first display 250-1 and the second display 250-2. The wearable device 200 may be displayed through the first display 250-1 and the second display 250-2 and may provide the user with a user experience (e.g., video see-through (VST)) in which a real object and a virtual object are mixed by combining the virtual object in a frame including the real object. The wearable device 200 may change the virtual object based on information obtained by the cameras 240-1, 240-2, 240-3, 240-4, 240-5, 240-6, 240-7, 240-8, and/or the depth sensor 230. For example, in case that a visual object corresponding to the real object and the virtual object are at least partially overlapped in the frame, the wearable device 200 may stop displaying the virtual object based on detecting a motion for interacting with the real object. By stopping displaying the virtual object, the wearable device 200 may prevent the visibility of the real object from deteriorating as the visual object corresponding to the real object is occluded by the virtual object.

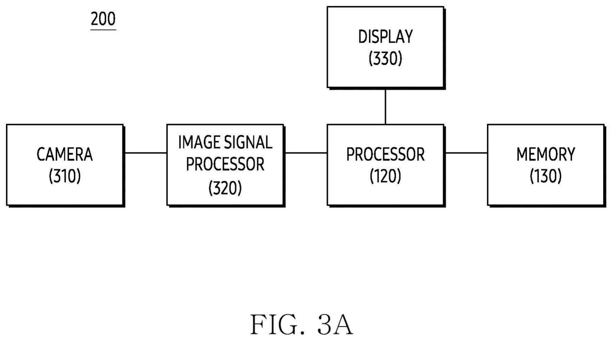

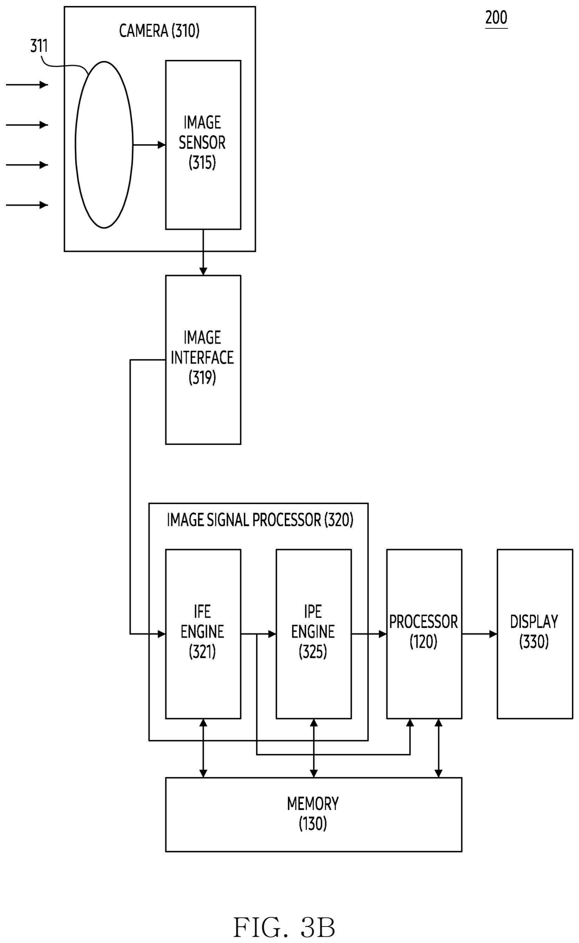

Hereinafter, an example of an operation performed by an electronic device (e.g., the electronic device 101 of FIG. 1) including the wearable device 200 of FIGS. 2A and 2B will be described with reference to FIGS. 3A and 3B.

FIG. 3A is a simplified block diagram of a wearable device according to an embodiment of the disclosure. FIG. 3B illustrates components for processing a camera image of a wearable device according to an embodiment of the disclosure.

In the description of FIGS. 3A and 3B, an element or a structure of an electronic device 101 or the wearable device 200 described through FIGS. 1, 2A, and 2B may be referred to.

Referring to FIG. 3A, the wearable device 200 may include a processor 120, memory 130, a camera 310, an image signal processor (ISP) 320, and a display 330. For example, the camera 310 may be included in camera module 180 of FIG. 1. For example, the camera 310 may correspond to each of cameras 240-9 and 240-10 of FIG. 2B. For example, the image signal processor (ISP) 320 may correspond to an auxiliary processor 123 of FIG. 1. For example, the display 330 may be included in display module 160 of FIG. 1. For example, the display 330 may correspond to each of the first display 250-1 and the second display 250-2 of FIG. 2A.

The camera 310 may obtain an image of an environment surrounding the wearable device 200. Here, the camera 310 may be the cameras 240-9 and 240-10 disposed on a second surface 220 of the wearable device 200 in order to recognize an external object.

Referring to FIG. 3B, the camera 310 may include a lens 311 and an image sensor 315.

The lens 311 may condense light reflected by an object or landscape that is a subject of photography. The lens 311 may be implemented as a lens assembly in which a plurality of lenses are aligned in an optical axis direction. Lenses included in the lens assembly may have the same lens property (e.g., angle of view, focal length, or f number), or at least one lens may have at least one different lens property from another lens. The lens assembly may include, for example, a wide-angle lens or a telephoto lens.

The lens 311 may be moved by, for example, an actuator (not illustrated). As a position of the lens 311 changes according to movement of the lens 311, the focal length of the lens 311 may change. As a result, focus on the object may be adjusted.

The image sensor 315 may include pixels for obtaining color information on the object. The image sensor 315 may include a pixel array in which a plurality of pixels are two-dimensionally arranged in a grid shape. One of a plurality of reference colors may be allocated to each of the plurality of pixels. For example, the one of the plurality of reference colors may be allocated to each of the plurality of pixels by a color filter. For example, the plurality of reference colors may be red, green, blue (RGB), yellow, black), or red, yellow, blue (RYB), RGB infrared ray (IR) light. For example, the color filter may be formed in a bayer pattern. However, it is not limited thereto. For example, the color filter may be formed in a pattern of RGB, CYYM, CYGM, RGBW, RYYB, or X-trans. According to an embodiment, each of the plurality of pixels may receive all of the plurality of reference colors. For example, each of the plurality of pixels may generate all electrical signals for the reference colors.

The image sensor 315 may include an RGB sensor, a black and white (BW) sensor, an IR sensor, or a ultraviolet (UV) sensor. The image sensor 315 may include a charge coupled device (CCD) or a complementary metal oxide semiconductor (CMOS).

Pixels of the image sensor 315 may generate a digital signal (or an electrical signal) based on light received through the lens 311. The image sensor 315 may generate a digital signal (or an electrical signal) based on the light reflected from the subject.

The image sensor 315 may generate raw digital image data (hereinafter, referred to as a 'raw image') based on the electrical signal. The image sensor 315 may output a raw image including the color information on the object. For example, the raw image outputted from the image sensor 315 may indicate a color value assigned to each of the image pixels. For example, in case that the image sensor 315 obtains the raw image through the color filter of the bayer pattern, image pixels included in the raw image may have the bayer pattern.

An image interface 319 may electrically connect the image sensor 315 and the image signal processor (ISP) 320. The image interface 319 may transmit the raw image outputted from the image sensor 315 to the ISP 320.

The ISP 320 may perform various processes on the raw image outputted from the image sensor 315. The ISP 320 may perform image processing on the raw image obtained through the image sensor 315. The ISP 320 may perform various processing on the raw image outputted from the image sensor 315 at a frame rate (or frame per second (FPS) corresponding to a sampling rate of the camera 310.

For example, the ISP 320 may perform image correction and image signal processing on the raw image. For example, the ISP 320 may perform hot pixel correction, de-mosaic, color interpolation, noise reduction, lens shading correction, defect pixel correction, green imbalance correction, crosstalk compensation, or auto dark level compensation (ADLC) for removing fixed pattern noise (FPN) for the image correction. For example, the ISP 320 may perform edge enhancement, gamma correction, color saturation correction, or hue correction for the image signal processing. However, it is not limited thereto. For example, the ISP 320 may perform auto white balance (AWB), auto focus (AF), auto exposure (AE), high dynamic range (HDR), tone curve adjustment, resolution adjustment (e.g., up-scale, down-scale), or format conversion (e.g., conversion from RAW to YUV or joint photographic experts group (JPEG). For example, the ISP 320 may add a graphic effect to the image. For example, the ISP 320 may perform depth map generation, three-dimensional modeling, panorama generation, feature point extraction, or image synthesis. However, it is not limited thereto.

The ISP 320 may perform control (e.g., exposure time control, read-out timing control (or sampling rate control)) on at least one (e.g., the image sensor 315) of components included in the camera 310. For example, the ISP 320 may control the sampling rate of the image sensor 315. For example, the ISP 320 may increase the sampling rate of the image sensor 315 at a reference sampling rate (e.g., 30 Hz). For example, the ISP 320 may lower the sampling rate of the image sensor 315 to less than or equal to the reference sampling rate (e.g., 30 Hz). For example, as the ISP 320 sets the sampling rate of the image sensor 315 to 30 Hz, the image sensor 315 may obtain 30 raw images per second and deliver them to the ISP 320. As the sampling rate is changed, power consumption of the camera 310 and the ISP 320 may be changed. For example, in case of increasing the sampling rate, the power consumption of the camera 310 and the ISP 320 may increase. For example, in case of lowering the sampling rate, the power consumption of the camera 310 and the ISP 320 may be reduced.

The ISP 320 may store the processed image in the memory 130 for additional processing. The ISP 320 may transmit the processed image to the processor 120 to output the processed image. According to an embodiment, the image processed by the ISP 320 may be referred to as a camera image.

The ISP 320 may include an image front end (IFE) engine 321 and an image processing end (IPE) 325. The IFE engine 321 may be a low-power engine, and the IPE 325 may be a high-power engine. An image processing speed of the IFE engine 321 may be faster than that of the IPE 325.

The IFE engine 321 and the IPE 325 may perform a designated function. For example, the IFE engine 321 may perform some functions of functions performed by the ISP 320, and the IPE 325 may perform a remaining function. For example, the IFE engine 321 may perform a front portion of an image processing pipeline, and the IPE 325 may perform a remaining portion of the image processing pipeline. For example, the IFE engine 321 may perform the image correction. For example, the IPE 325 may perform the image signal processing. However, it is not limited thereto.

The IFE engine 321 may perform pre-processing on the raw image outputted from the image sensor 315. For example, the IFE engine 321 may perform image correction and format conversion on the raw image. For example, the IFE engine 321 may perform hot pixel correction, de-mosaic, color interpolation, noise reduction, lens shading correction, defect pixel correction, green imbalance correction, crosstalk compensation, or auto dark level compensation (ADLC) for the raw image.

The IFE engine 321 may convert the raw image into an image of a designated format. For example, the IFE engine 321 may convert a raw image of RAWnbit into an image of a YUV format. Here, the raw image of the RAWnbit may be an n-bit RAW image. For example, the YUV format may include YUV420 or YUV422. However, it is not limited thereto.

The IFE engine 321 may output the pre-processed image. The IFE engine 321 may output the pre-processed image to the IPE 325. The IFE engine 321 may bypass the IPE 325. For example, the IFE engine 321 may output the pre-processed image to the processor 120 to be displayed through the display 330. The IFE engine 321 may output the pre-processed image to the memory 130. According to an embodiment, the pre-processed image may be referred to as pre-processed image data.

The IPE 325 may perform post-processing on the image pre-processed by the IFE engine 321. The IPE 325 may generate the post-processed image, by correcting and synthesizing the pre-processed image received from the IFE engine 321. For example, the IPE 325 may perform the edge enhancement, the gamma correction, the color saturation correction, or the hue correction. However, it is not limited thereto. For example, the IPE 325 may perform the HDR, the tone curve adjustment, the resolution adjustment (e.g., up-scale, down-scale), or the format conversion. For example, the IPE 325 may perform the depth map generation, the three-dimensional modeling, the panorama generation, the feature point extraction, or the image synthesis. However, it is not limited thereto. According to an embodiment, the post-processed image may be referred to as post-processed image data.

The IPE 325 may output the post-processed image. The IPE 325 may output the post-processed image to the processor 120 to be displayed on the display 330. IPE 325 may store the post-processed image in the memory 130.

The processor 120 may obtain the image. For example, the processor 120 may obtain the camera image from the ISP 320. Here, the camera image may be the image pre-processed in the IFE engine 321 or the image post-processed in the IPE 325. For example, the processor 120 may obtain an application image in response to executing an application 146.

The processor 120 may generate a frame. The processor 120 may generate a frame for augmented reality (AR), virtual reality (VR), mixed reality (MR), or extended reality (XR). The processor 120 may generate a frame for video see through (VST). The processor 120 may generate a frame including a pass-through region. Here, the VST and the pass-through may mean a technique providing information related to an external environment obtained through the camera to the user through the display 330.

For example, the processor 120 may generate the frame based on the camera image. For example, the processor 120 may generate the frame based on the camera image and the application image. For example, the processor 120 may generate the frame by synthesizing the camera image and the application image. The processor 120 may generate a video. The processor 120 may generate the video based on sequentially obtained camera images. The processor 120 may generate the video based on the sequentially obtained camera images and application images. Here, the video may include frames generated based on the camera images sequentially obtained through the camera 310. Hereinafter, a region displayed by the camera image in the frame may be referred to as a camera region, and a region displayed by the application image in the frame may be referred to as an application region.

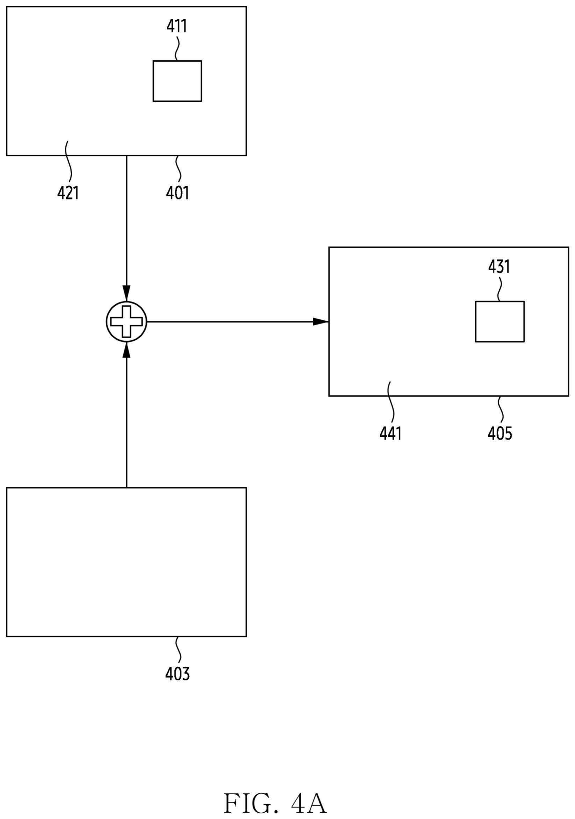

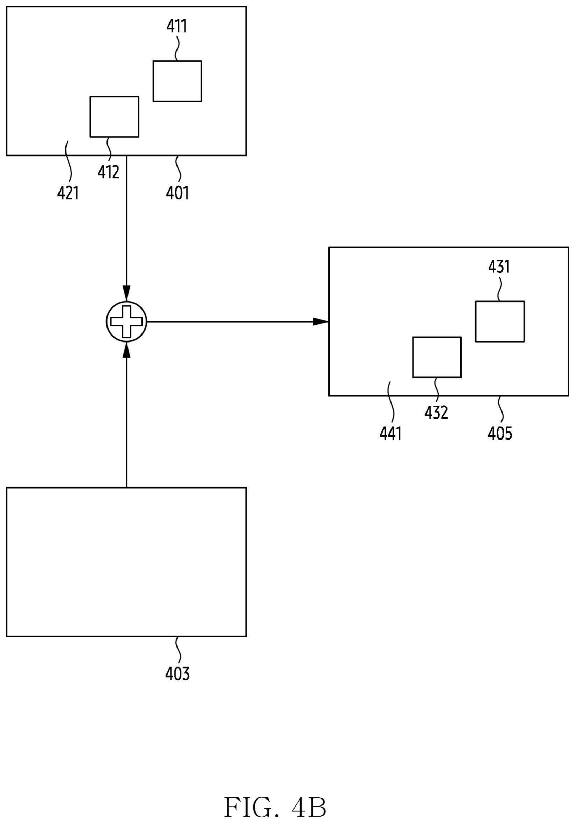

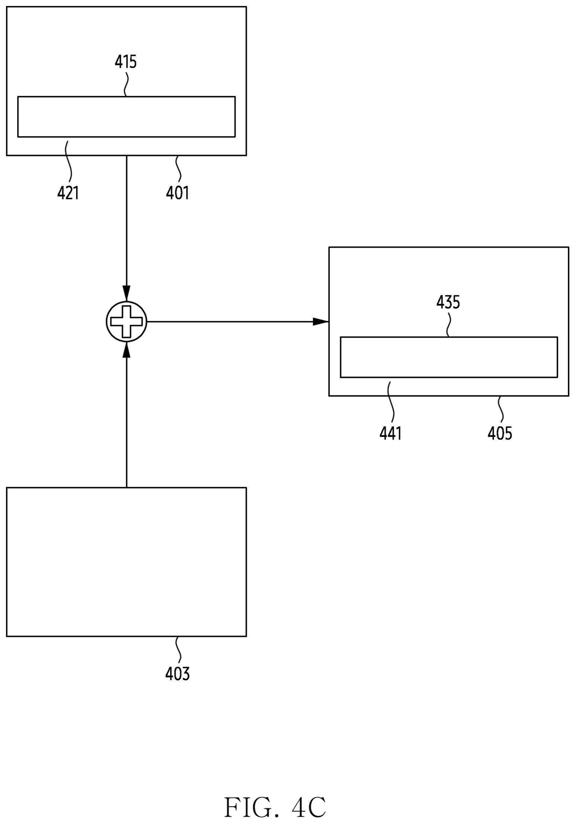

The processor 120 may set the camera region based on state information. The processor 120 may generate the frame by overlapping (or synthesizing) the camera region with the application image. For example, the processor 120 may identify a partial region on the application image. For example, the processor 120 may synthesize a camera region corresponding to the partial region identified on the application image into the application image. Here, the camera region may be referred to as a VST region or the pass-through region. Hereinafter, an operation in which the wearable device 200 sets the camera region may be described with reference to FIGS. 4A, 4B, and 4C.

The processor 120 may generate the frame by overlapping (or synthesizing) at least a partial region of the application image with the camera image. For example, the processor 120 may identify a partial region on the camera image. For example, the processor 120 may synthesize an application region corresponding to the partial region identified on the camera image into the camera image.

The processor 120 may generate the frame at a designated frame per second (FPS). For example, the processor 120 may generate the frame at the highest FPS among FPS of the application image and at least one FPS of the camera image. The processor 120 may generate a video including frames based on the camera images and the application images that are sequentially obtained at the designated frame per second (FPS).

The processor 120 may display the generated frame through the display 330. The processor 120 may transmit the generated frame to the display 330. Here, transmitting the frame to the display 330 may mean storing the frame in the frame buffer of the display 330. The display 330 may display the transmitted frame. For example, the display 330 may read the frame stored in the frame buffer at a designated refresh rate and may display the read frame. Here, the refresh rate may be different from or the same as the FPS at which the ISP 320 generates the image.

The display 330 may display the frame. For example, the display 330 may read the frame stored in the frame buffer at the designated refresh rate and may display the read frame. Here, the refresh rate may be different from or the same as the FPS at which the ISP 320 and/or the processor 120 generates the image.

The processor 120 may identify a region of interest (ROI) in the frame. The processor 120 may identify the region of interest (ROI) in the frame displayed through the display 330. The processor 120 may identify the region of interest (ROI) based on input. The processor 120 may identify the region of interest (ROI) based on time length of input. Here, the input may include user input. The user input may include a user's gaze. The processor 120 may identify the region of interest (ROI) in the frame based on maintenance time (or the time length) of the user's gaze. Here, the user's gaze may be identified based on images obtained by cameras 240-1 and 240-2 for eye tracking (ET). The images obtained by the cameras 240-1 and 240-2 may be glint images. For example, based on a position of an eyeball included in the images obtained by the cameras 240-1 and 240-2, the processor 120 may identify the user's gaze. For example, based on a position of an iris included in the images obtained by the cameras 240-1 and 240-2, the processor 120 may identify the user's gaze. The processor 120 may identify the user's gaze by tracking the position of the iris. However, it is not limited thereto. The user input may include interaction with the user's input module 150. For example, the processor 120 may identify the region of interest (ROI) based on an object indicated by the user's gesture input. For example, the processor 120 may identify the region of interest (ROI) based on an object indicated by the user's touch input. For example, the processor 120 may identify the region of interest (ROI) based on an object indicated by the user's hovering input.

The processor 120 may identify which region of the frame the region of interest (ROI) is located in. For example, the processor 120 may identify whether the region of interest (ROI) is located in the camera region of the frame. For example, the processor 120 may identify whether the region of interest (ROI) is located in the application region of the frame.

The processor 120 may change a processing scheme for the camera image according to a region on the frame in which the region of interest (ROI) is located. The processor 120 may change a processing scheme of the camera image for a next frame according to the region on the frame in which the region of interest (ROI) is located. For example, the processor 120 may change the processing scheme of the camera image for a frame of a second time point after a first time point based on the region of interest (ROI) identified in the frame of the first time point.

The processor 120 may change a frame rate (or FPS) for obtaining the camera image according to a region on the frame in which the region of interest (ROI) is located, or may determine whether to process the image through the IPE 325.

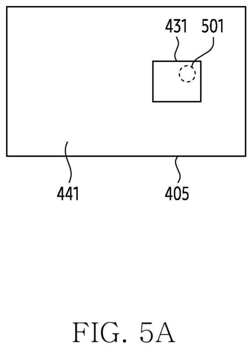

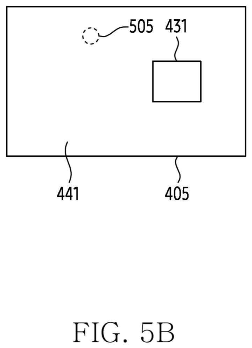

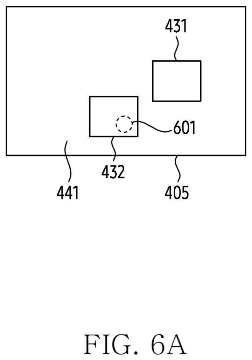

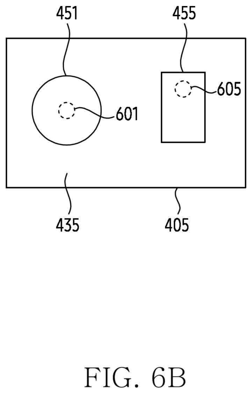

The processor 120 may process the camera image through a first processing scheme based on the region of interest (ROI) overlapping the camera region. The processor 120 may process the camera image through a second processing scheme that is different from the first processing scheme based on the region of interest (ROI) being outside the camera region. The processor 120 may process the camera image (hereinafter, referred to as a 'second camera image') obtained at the second time point after the first time point through the first processing scheme based on the region of interest (ROI) overlapping the camera region based on the camera image (hereinafter, referred to as a 'first camera image') of the first time point. The processor 120 may process the second camera image through the second processing scheme different from the first processing scheme based on the region of interest (ROI) being outside of the camera region. Here, resource consumption of the electronic device 101 according to the first processing scheme may be greater than resource consumption of the electronic device 101 according to the second processing scheme. Here, the resource may include power and/or time. Hereinafter, an operation in which the wearable device 200 processes the camera image based on the region of interest (ROI) overlapping the camera region may be described with reference to FIGS. 5A, 5B, 6A, and 6B.

The processor 120 may vary the processing scheme for the camera image according to a change in the camera region. For example, in case that data indicating the change in the camera region is outside the reference range, the camera image may be processed by the first processing scheme. For example, in case that the data indicating the change in the camera region is in the reference range, the camera image may be processed by the second processing scheme. Here, the change in the camera region may be identified by amount of change in values of pixels included in the camera region. The change in the camera region may be identified by movement or movement speed of an object included in the camera region. The change in the camera region may be identified by a change in scenery (or background) included in the camera region. However, it is not limited thereto. The change in the camera region may be identified by movement of the electronic device 101. For example, the processor 120 may identify the movement of the electronic device 101 based on sensor module 176 (e.g., IMU sensor) of the electronic device 101. For example, in case that the movement of the electronic device 101 is more than designated criteria, the processor 120 may identify that the camera region is changed.

The processor 120 may vary the processing scheme for the camera image according to brightness of the camera region. For example, in case that the brightness of the camera region is more than the reference brightness, the processor 120 may process the camera image through the first processing scheme. For example, in case that the brightness of the camera region is under the reference brightness, the processor 120 may process the camera image through the second processing scheme.

The processor 120 may set resolution of the frame differently. The processor 120 may set resolution of the application region differently. The processor 120 may perform foveated rendering. Here, the foveated rendering may be a technique for setting resolution based on the user's gaze. For example, the processor 120 may set the resolution of the frame differently, based on the region of interest (ROI) corresponding to the user's gaze.

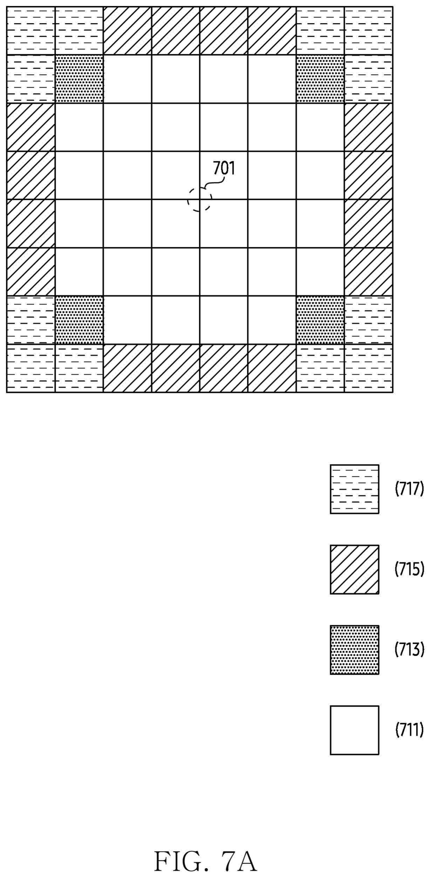

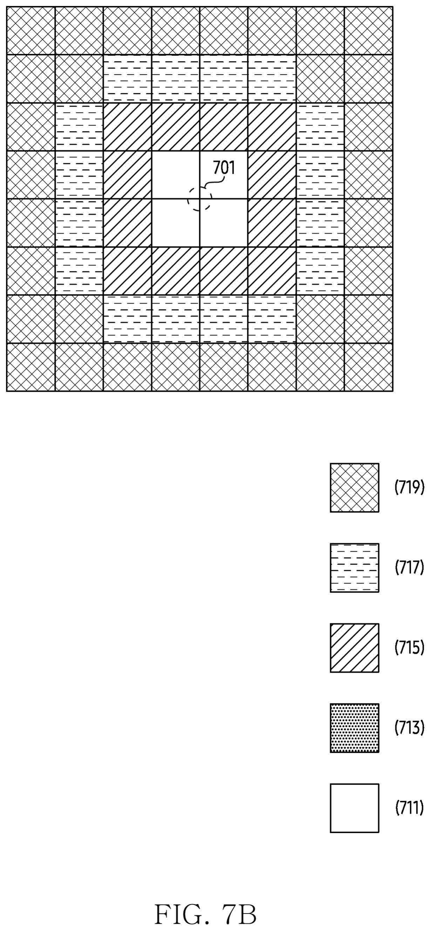

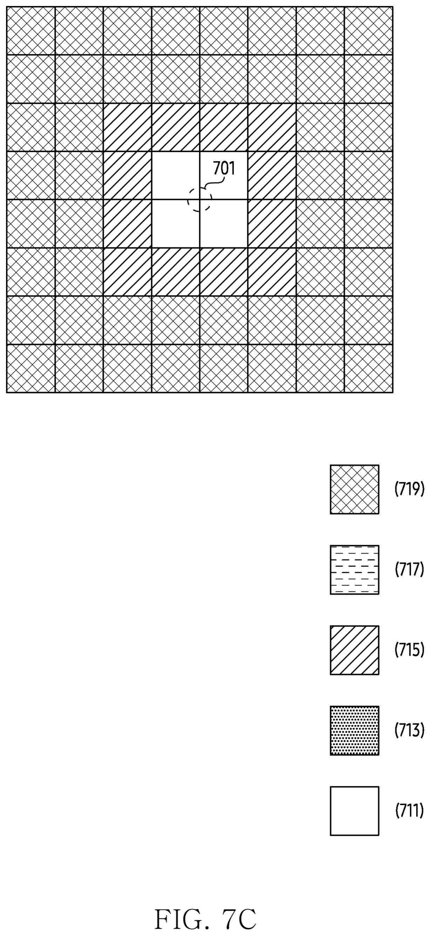

The processor 120 may vary the resolution of the frame according to the region on the frame in which the region of interest (ROI) is located. The processor 120 may vary the resolution of the application region according to the region on the frame in which the region of interest (ROI) is located. For example, the processor 120 may set the resolution of the application region, based on a distance from the region of interest (ROI). Hereinafter, an operation in which the electronic device 101 sets the resolution of the frame may be described with reference to FIGS. 7A, 7B, and 7C.

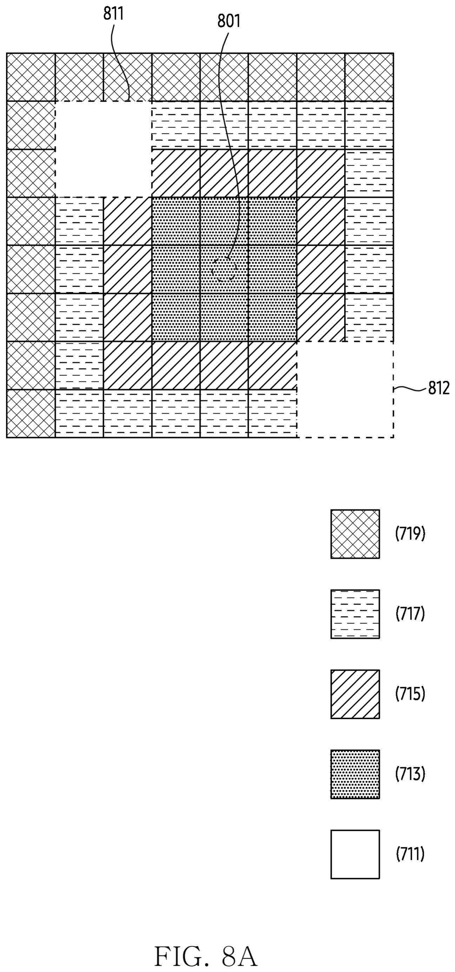

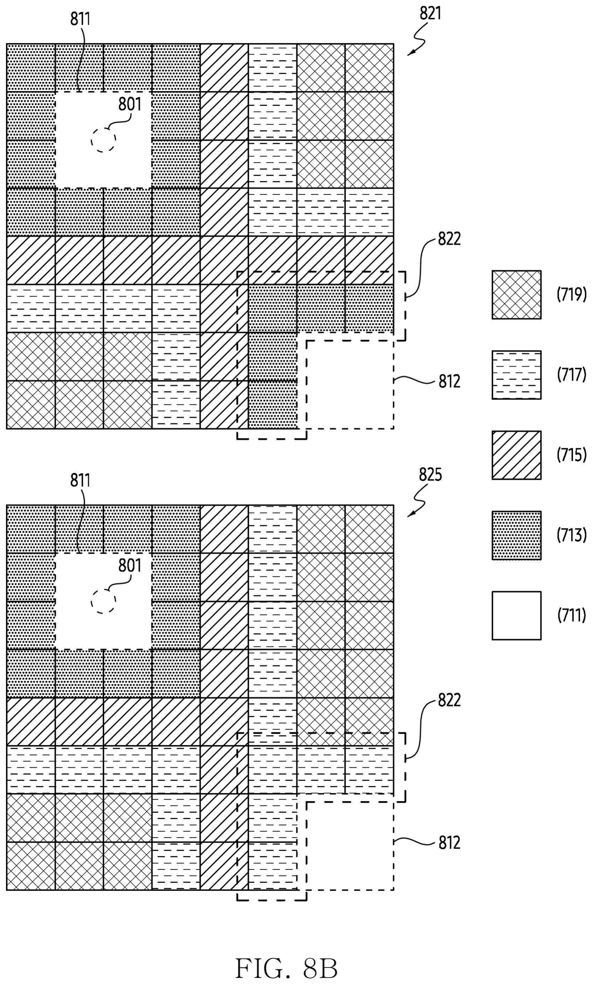

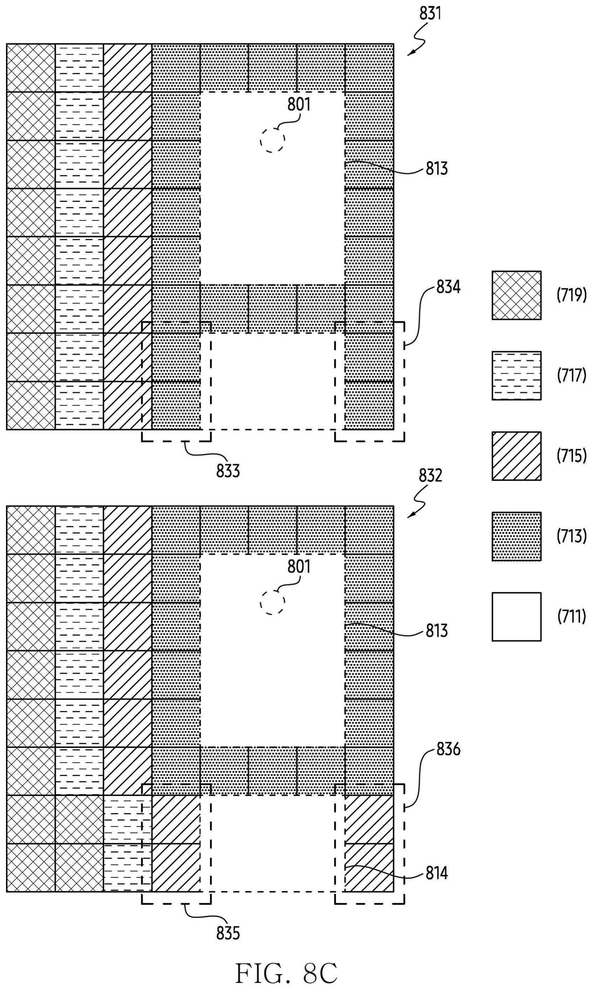

The processor 120 may vary the resolution of the application region according to a distance from the camera region on the frame. For example, the processor 120 may set the resolution of the application region adjacent to the camera region to be higher than the resolution of the application region away from the camera region. Hereinafter, an operation in which the wearable device 200 sets the resolution of the frame based on the camera region may be described with reference to FIGS. 8A, 8B, and 8C.

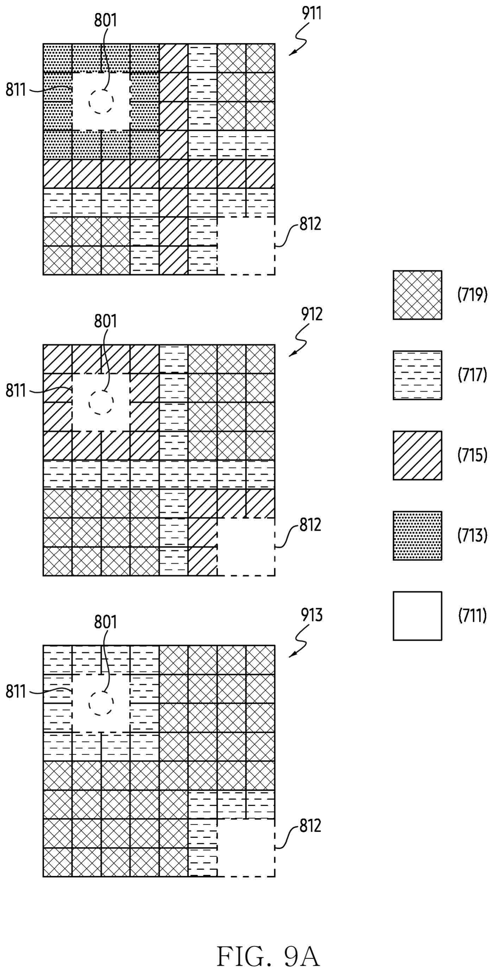

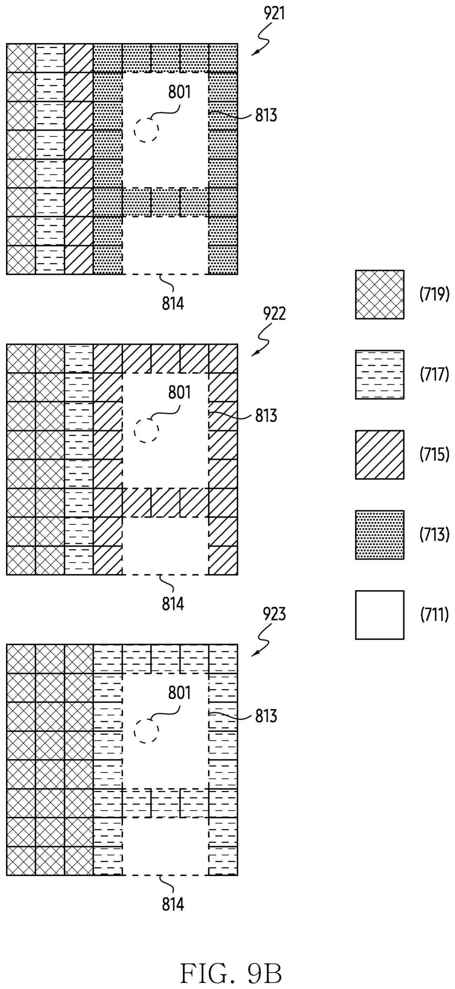

The processor 120 may vary the resolution of the application region based on a state of the wearable device 200. For example, the processor 120 may vary the resolution of the application region based on remaining amount of a battery 189 of the wearable device 200. For example, the processor 120 may lower the resolution of the application region as the remaining amount of the battery 189 of the wearable device 200 decreases. For example, the processor 120 may vary the resolution of the application region based on temperature of the wearable device 200. For example, the processor 120 may lower the resolution of the application region as the temperature of the wearable device 200 increases. Hereinafter, an operation in which the wearable device 200 sets the resolution of the frame based on the state of the wearable device 200 may be described with reference to FIGS. 9A and 9B.

As described above, as the wearable device 200 sets the processing scheme of the camera image based on interaction with the user, it may provide the user with a usage environment in which a user experience of an image perceived by the user is not reduced, and may also reduce power consumption or latency. The wearable device 200 may provide the user with the usage environment in which the user experience of the image perceived by the user is not reduced by reducing the resolution based on the interaction with the user, and may also reduce the power consumption. Here, the user experience of the image perceived by the user may not be reduced by providing the user with a high resolution image or an image at a high rate scanning rate according to a situation in which the user is used.

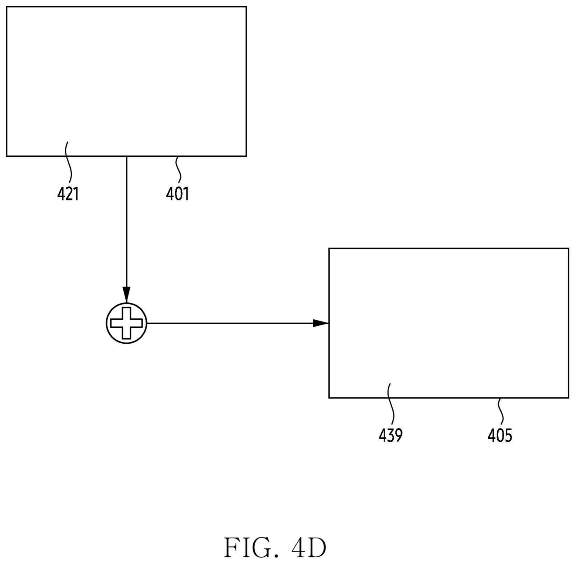

Hereinafter, an example of an operation in which the wearable device 200 sets the camera region and the application region will be described with reference to FIGS. 4A, 4B, 4C, and 4D.

FIG. 4A illustrates a frame displayed based on a camera image of an environment surrounding a wearable device according to an embodiment of the disclosure.

FIG. 4B illustrates a frame displayed based on a camera image of an environment surrounding a wearable device according to an embodiment of the disclosure. FIG. 4C illustrates a frame displayed based on a camera image of an environment surrounding a wearable device according to an embodiment of the disclosure. FIG. 4D illustrates a frame displayed based on a camera image of an environment surrounding a wearable device according to an embodiment of the disclosure.

A component or a structure of an electronic device 101 or a wearable device 200 described through FIGS. 1, 2A, 2B, 3A, and 3B may be referred to in a description of FIGS. 4A, 4B, 4C, and 4D.

A processor 120 may obtain an image. For example, the processor 120 may obtain a camera image 401 from the ISP 320. Here, the camera image 401 may be an image pre-processed in an IFE engine 321 or an image post-processed in an IPE 325. The camera image 401 may include a region 411 including an object and a region 421 not including the object. For example, the processor 120 may obtain an application image 403 in response to executing an application 146.

Referring to FIG. 4A, the processor 120 may set a camera region 431 on a frame 405. For example, the processor 120 may set the camera region 431 on the frame based on the region 411 including the object. For example, the processor 120 may identify the object in the camera image 401. For example, the processor 120 may set the camera region 431 based on the identified object. For example, the processor 120 may set a region on the frame 405 corresponding to the region 411 of the object identified in the camera image 401 as the camera region 431. According to an embodiment, identification of the object in the camera image 401 may be performed through components (e.g., an image signal processor (ISP) 320, or an image sensor 315) other than the processor 120.

The processor 120 may set the camera region 431 based on information on the object included in the camera image 401. For example, the processor 120 may set the region on the frame 405 corresponding to the region 411 of the identified object as the camera region 431, in response to an object preset by the user being identified in the camera image 401. For example, the object preset by the user may be a multimedia device (e.g., a computer, a notebook, a television (TV), a smartphone), an input device (e.g., a keyboard, a controller), or an output device (e.g., a speaker). Here, the information on the object may indicate a type or name of the identified object.

The processor 120 may set the camera region 431 based on situation information. For example, the processor 120 may set the camera region 431 based on the user's situation. For example, in case that input is requested from the user (e.g., in case that an input for an identification (ID), a password, or a user selection is required), the processor 120 may set a region on a frame corresponding to a region of the input device as the camera region. For example, in case that the user is required to concentrate or prohibit interference (e.g., while working, resting, or eating), the processor 120 may set a region on a frame corresponding to a region of an object to provide the user with an environment for concentration or interference prohibition as the camera region. For example, in case that surrounding noise is high (noisy environment), the processor 120 may set a region on a frame corresponding to a region of an earphone or a headset as the camera region for concentration or interference prohibition. For example, in case that the surrounding illuminance is high (bright environment) the processor 120 may set a region on a frame corresponding to a switch of a light source as the camera region for concentration or interference prohibition. Here, the situation information may include information on an environment surrounding the electronic device 101. The situation information may include information on the user's environment of the electronic device 101. For example, the surrounding environment may include at least one of illuminance, noise, surrounding electronic devices, indoor or outdoor, whether to move, or whether to board. For example, the user's environment may include at least one of whether to work, whether to rest, whether to learn, or whether to move. However, it is not limited thereto.

The processor 120 may set the camera region 431 based on the user input. For example, the processor 120 may set the region on the frame 405 designated by the user input as the camera region 431.

The processor 120 may identify the user's gaze through an eye tracking camera (e.g., cameras 240-1 and 240-2). The processor 120 may set a region on a frame identified based on the user's gaze as the camera region. For example, the processor 120 may set a region on a frame in which the user's gaze is directed as the camera region. For example, in case that the user's gaze is maintained in a specific region for more than or equal to reference time, the processor 120 may set the specific region as the camera region.

The processor 120 may identify the user's gesture through a camera (e.g., cameras 240-5, 240-6, 240-7, and 240-8) for gesture recognition. The processor 120 may set a region on a frame identified based on the user's gesture as the camera region. For example, the processor 120 may set a region on a frame corresponding to a region of an object indicated by the user's gesture as the camera region. Here, the user's gesture may include at least one of a grab (grasp) input or a pointing input.

The processor 120 may set a region on the frame as the camera region based on the user's gaze and gesture. For example, when the user's gaze is directed to the region on the frame and another input (e.g., the grab (grasp) input, the pointing input, or the facial expression (e.g., eye blink)) of the user indicating the region in which the user's gaze is directed is identified, the processor 120 may set the region as the camera region.

Referring to FIG. 4B, the processor 120 may set two or more camera regions 431 and 432 on the frame 405. For example, the processor 120 may set regions on the frame 405 corresponding to regions 411 and 412 of each of the objects as the camera regions 431 and 432, in response to the fact that two or more of the objects included in the camera image 401 are objects preset by the user.

The processor 120 may set the camera regions 431 and 432 based on usage information of the application 146. For example, the usage information may include information on an execution environment of the application, information on a type of application, user information using the application, and/or previous execution information of the application.

The processor 120 may set the camera regions 431 and 432 based on information on the execution environment (e.g., the presence or not, number, or type of applications executed in the foreground and/or background) included in the usage information of the application 146. For example, the processor 120 may set the camera regions 431 and 432 based on type information of the executed application 146 included in the usage information. For example, in case that an application (e.g., map application, video reproduction application) that requires the user's concentration (e.g., visual concentration) is being executed, the processor 120 may set the camera regions 431 and 432 in a region other than the region in which the application is being displayed. For example, in case that an application (e.g., a music reproduction application) that does not require the user's concentration (e.g., visual concentration) is being executed, the processor 120 may set the camera regions 431 and 432 in a region including the region in which the application is being displayed.

The processor 120 may set the camera regions 431 and 432 based on the user information of the application 146. For example, the processor 120 may set the camera region set by the user when the application 146 is previously executed as the current camera regions 431 and 432. For example, in case that the user previously set the camera region, the processor 120 may set the region previously set by the user as the camera regions 431 and 432. For example, in case that the user sets the camera region while using a specific application, the processor 120 may set the region previously set by the user when the application is executed as the camera regions 431 and 432. For example, in case that the user has not previously set the camera region, the processor 120 may set the camera regions 431 and 432 by using another portion of the usage information. For example, in case that the user has not previously set the camera region, the processor 120 may set the camera regions 431 and 432 by using the information on the execution environment of the application or the information on the type of the application.

The processor 120 may set a region preset by the application 146 as the camera regions 431 and 432. For example, the processor 120 may set the camera regions 431 and 432 based on content included in the application image 403. For example, the processor 120 may set a region preset for a type of content included in the application image 403 as the camera regions 431 and 432. For example, the processor 120 may identify the type of content included in the application image 403. For example, the processor 120 may determine whether the type of content allows synthesis (or overlap) by the camera region. For example, in case that the type of content allows synthesis (or overlap) by the camera region, the processor 120 may set the camera regions 431 and 432 in the region including the region of the content. For example, in case that the type of content does not allow synthesis (or overlap) by the camera region, the processor 120 may set the camera regions 431 and 432 in a region excluding the region of the content. Here, whether to allow synthesis (or overlap) by the camera region may be preset by the user. However, it is not limited thereto. For example, the processor 120 may set the camera regions 431 and 432 based on degree to which visual interaction with the user is required. For example, in case of content (e.g., game, video) that requires the visual interaction with the user, the processor 120 may set the camera regions 431 and 432 in the region excluding the region of the content. For example, in case of content that does not require the visual interaction with the user (e.g., music, a result of artificial intelligence (AI) assist), the processor 120 may set the camera regions 431 and 432 in a region including the content region.

Referring to FIG. 4C, the processor 120 may set a camera region 435 on the frame 405 based on a reference ratio. For example, in response to identifying a request of a split screen, the processor 120 may set the camera region 435 on the frame 405 based on the reference ratio. For example, the processor 120 may set a lower portion of the frame 405 as the camera region 435 and set a remaining portion as an application region 441.

The processor 120 may change the camera region. For example, the processor 120 may change (e.g., resize, move, replace) the camera region based on that a running application is changed. For example, the processor 120 may change (e.g., resize, move, replace) the camera region as the object included in the camera region is changed (e.g., resize, move, replace). Here, as an object photographed through the camera 310 moves to a long distance, the processor 120 may change size of the camera region to be small according to movement of the object.

The processor 120 may generate the frame 405 by synthesizing (or overlapping) the regions 411, 412, and 415 on the camera image corresponding to the camera regions 431, 432, and 435 with the application image 403. However, it is not limited thereto. The processor 120 may generate the frame 405 by merging the regions 411, 412, and 415 on the camera image corresponding to the camera regions 431, 432, and 435 and a region on the application image 403 corresponding to the application region 441.

When overlapping the regions 411, 412, and 415 on the camera image corresponding to the camera regions 431, 432, and 435 on the application image 403, the processor 120 may set transparency of the regions 411, 412, and 415 on the camera image. Here, the transparency may indicate degree to which the application image 403 is visible to the user through the regions 411, 412, and 415 on the overlapping camera image. Here, the transparency may be determined by input by the user. However, it is not limited thereto.

Referring to FIG. 4D, the processor 120 may set the camera region 439 on the frame 405 based on the reference ratio. For example, the processor 120 may set the camera region 439 on the frame 405 in response to identifying the entire VST request. For example, the processor 120 may set the entire frame 405 as the camera region 439.

The processor 120 may generate the frame 405 based on the regions 411, 412, and 415 on the camera image corresponding to the camera regions 431, 432, and 435.

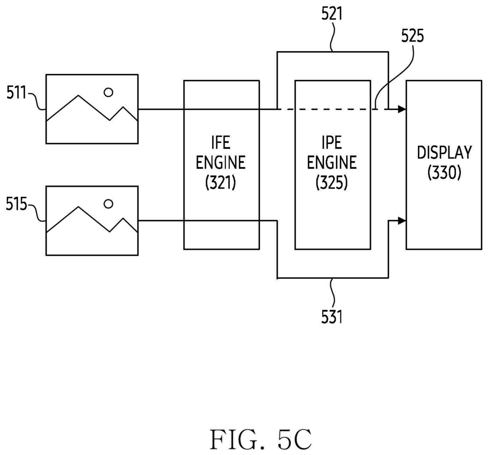

FIG. 5A illustrates a region of interest on a frame according to an embodiment of the disclosure. FIG. 5B illustrates a region of interest on a frame according to an embodiment of the disclosure. FIG. 5C illustrates a path processing a camera image according to a region of interest on a frame according to an embodiment of the disclosure.

A component or a structure of an electronic device 101 or a wearable device 200 described through FIGS. 1, 2A, 2B, 3A, and 3B may be referred to in a description of FIGS. 5A and 5B.

A processor 120 may identify which region of the frame the region of interest (ROI) is located in. For example, the processor 120 may identify whether the region of interest (ROI) is located in the camera region of the frame. For example, the processor 120 may identify whether the region of interest (ROI) is located in the application region of the frame.

Referring to FIG. 5A, a region of interest (ROI) 501 may be located in a camera region 431 of a frame 405. Referring to FIG. 5B, a region of interest (ROI) 505 may be located outside the camera region 431 of the frame 405.

The processor 120 may process the camera image through a first processing scheme based on the region of interest (ROI) overlapping the camera region. The processor 120 may process the camera image through a second processing scheme based on that the region of interest (ROI) deviates from the camera region.

For example, the first processing scheme may be a scheme in which the processor 120 changes a frame rate (or FPS) of an ISP 320. For example, the first processing scheme may be a scheme in which the processor 120 sets a generation speed (or sampling rate, FPS) of the camera image to be high. For example, the first processing scheme may be a method in which the processor 120 sets the FPS for the camera image higher than an FPS for an application image. Hereinafter, the FPS for the application image may be referred to as a second FPS, and the FPS higher than the second FPS may be referred to as a first FPS. Here, the second FPS may be 24, 25, or 30, FPS, and the first FPS may be 60, 72, 75, 120, or 144 FPS. However, it is not limited thereto.

For example, the first processing scheme may be a scheme in which the processor 120 changes the frame rate (or FPS) of the ISP 320 and bypasses image processing through an IPE 325 of the camera image. For example, the first processing scheme may be a scheme in which the processor 120 sets the FPS for the camera image higher than the second FPS and bypasses image processing through the IPE 325 of the camera image. Here, bypassing the IPE 325 may mean that the camera image processed through an IFE engine 321 is transmitted directly from the IFE engine 321 to the processor 120 or indirectly through the memory 130. Bypassing the IPE 325 may mean displaying a frame based on the camera image processed by the IFE engine 321 through the display 330. Bypassing the IPE 325 may mean that image processing through the IPE 325 is not performed on the camera image processed through the IFE engine 321. Bypassing the IPE 325 may mean that the camera image pre-processed through the IFE engine 321 is not post-processed through the IPE 325.

For example, the first processing scheme may be a scheme in which the processor 120 changes the frame rate (or FPS) of the ISP 320 and/or does not bypass image processing through the IPE 325 of the camera image. For example, the first processing scheme may be a method in which the processor 120 sets the FPS for the camera image higher than the second FPS and does not bypass image processing through the IPE 325 of the camera image. For example, the first processing scheme may be a scheme in which the processor 120 sets the FPS for the camera image higher than the second FPS and bypasses image processing through the IPE 325 of the camera image. For example, the first processing scheme may be a scheme in which the processor 120 sets the FPS for the camera image to be the same (or not high) as the second FPS and does not bypass image processing through the IPE 325 of the camera image.

For example, the first processing scheme may be a scheme in which the processor 120 sets the FPS for the camera image to be the same (or not high) as the second FPS and does not bypass image processing through the IPE 325 of the camera image. Here, not bypassing the IPE 325 may mean that the camera image processed through the IFE engine 321 is transmitted directly from the IFE engine 321 to the IPE 325 or indirectly through the memory 130. Not bypassing the IPE 325 may mean that displaying a frame based on the camera image processed by the IFE engine 321 and the IPE 325, through the display 330. Not bypassing the IPE 325 may mean that image processing through the IPE 325 is performed on the camera image processed through the IFE engine 321. Not bypassing the IPE 325 may mean post-processing the camera image pre-processed through the IFE engine 321 through the IPE 325. Here, the IPE 325 may perform high dynamic range (HDR), tone curve adjustment, resolution adjustment (e.g., up-scale, down-scale), or format conversion (e.g., conversion from RAW to YUV, or joint photographic experts group (JPEG)). For example, the IPE 325 may increase the resolution of the camera image processed through the IFE engine 321 to be more than or equal to a designated resolution (e.g., high definition (HD), full HD (FHD), quad HD (QHD), or ultra HD (UHD)). In case that the region of interest (ROI) and the camera region overlap, the processor 120 may display the camera image processed through the IFE engine 321 and the IPE 325 on the camera region of the frame in order to more precisely and clearly display the camera image to the user.

For example, the second processing scheme may be a scheme in which the processor 120 changes the frame rate (or FPS) of the ISP 320. For example, the second processing scheme may be a scheme in which the processor 120 sets the generation speed (or sampling rate, FPS) of the camera image to be low. For example, the second processing scheme may be a scheme in which the processor 120 sets the FPS for the camera image to be the same as (or not high) the second FPS.

For example, the second processing scheme may be a scheme of changing the frame rate (or FPS) of the ISP 320 and bypassing image processing through the IPE 325 of the camera image. For example, the second processing scheme may be a scheme in which the processor 120 sets the FPS for the camera image to be the same as (or not high) as the second FPS and bypasses image processing through the IPE 325 of the camera image.

The processor 120 may set the generation speed (or sampling rate, FPS) of the camera image to be high, based on the region of interest (ROI) overlapping the camera region. The processor 120 may set the FPS for the camera image higher than the second FPS based on the region of interest (ROI) overlapping the camera region. The processor 120 may change a sampling rate of the camera 310 together with the frame rate based on the region of interest (ROI) overlapping the camera region. The processor 120 may change a refresh rate of the display 330 together with the frame rate based on the region of interest (ROI) overlapping the camera region. Here, the frame rate, the sampling rate, and the refresh rate may be changed in correspondence with each other. For example, a period of the frame rate, the sampling rate, and the refresh rate may be changed to be equal to each other.

The processor 120 may set the FPS for the camera image higher than the second FPS and may bypass image processing through the IPE 325 of the camera image, based on the region of interest (ROI) overlapping the camera region. The processor 120 may set the FPS for the camera image higher than the second FPS and may bypass the IPE 325, based on the region of interest (ROI) overlapping the camera region.

The processor 120 may set the FPS for the camera image to be the same as (or not higher than) the second FPS and may not bypass image processing through the IPE 325 of the camera image, based on the region of interest (ROI) overlapping the camera region. The processor 120 may set the FPS for the camera image to be the same as (or not higher than) the second FPS and may not bypass the IPE 325, based on the region of interest (ROI) overlapping the camera region.

The processor 120 may bypass the IPE 325 based on the region of interest (ROI) being outside of the camera region. For example, the processor 120 may set the FPS for the camera image to be the same as (or not higher than) the FPS for the application image and may bypass the IPE 325 based on the region of interest (ROI) being outside of the camera region.

Referring to FIG. 5C, in case that the region of interest (ROI) 501 is located in the camera region 431, the processor 120 may process a camera image 511 through one of paths 521 and 525. In case that the region of interest (ROI) 505 is not located in the camera region 431, the processor 120 may process a camera image 515 through a path 531.

The path 521 may be a path in which the processor 120 sets the FPS for the camera image higher than the second FPS and bypasses image processing of the camera image through the IPE 325. The path 525 may be a path in which the processor 120 sets the FPS for the camera image to be the same as (or not higher than) the second FPS and does not bypass image processing through the IPE 325 of the camera image. The path 531 may be a path in which the processor 120 sets the FPS for the camera image to be the same as (or not higher than) the second FPS and bypasses image processing through the IPE 325 of the camera image.

In case that the processor 120 selects the first processing scheme, the processor 120 may select among a path 521 or a path 525. For example, in case that the processor 120 selects the first processing scheme, it may select the path 521 or the path 525 according to a change in the camera region. For example, in case that the processor 120 selects the first processing scheme, it may select the path 521 or the path 525 according to brightness of the camera region. In case that the processor 120 selects the second processing scheme, it may select the path 531. In case that the region of interest (ROI) 505 is not located in the camera region 431, the processor 120 may select the second processing scheme.

FIG. 6A illustrates a region of interest on a frame according to an embodiment of the disclosure.

In a description of FIG. 6A, a component or a structure of an electronic device 101 or a wearable device 200 described through FIGS. 1, 2A, 2B, 3A, and 3B may be referred to.

As illustrated in FIG. 6A, in case that two or more camera regions 431 and 432 are included in a frame 405, the processor 120 may vary a processing scheme for the camera image according to whether the region of interest (ROI) is located in any one of the two or more camera regions 431 and 432.

For example, the processor 120 may apply the first processing scheme to the camera image for the camera region in which the region of interest (ROI) is located among the two or more camera regions 431 and 432, and may apply the second processing scheme to the camera image for the camera region in which the region of interest (ROI) is not located.

Referring to FIG. 6A, the processor 120 may apply the first processing scheme to a camera image for a camera region 432 in which a region of interest (ROI) 601 is located, and may apply the second processing scheme to a camera image for the camera region 431 in which the region of interest (ROI) 601 is not located.

For example, the processor 120 may set an FPS of the camera image for the camera region 432 as a first FPS, and may set an FPS of the camera image for the camera region 431 as a second FPS. For example, in case that the first FPS is 60 FPS and the second FPS is 30 FPS, the camera image for the camera region 431 may be obtained once while the camera image for the camera region 432 is obtained twice. For example, the processor 120 may sample (or subsample) the camera image to the first FPS through some pixels among pixels of the camera 310 corresponding to the camera region 432. For example, the processor 120 may sample (or subsample) the camera image to the second FPS through some pixels among pixels of the camera 310 corresponding to the camera region 431.

For example, in case that the region of interest (ROI) is not located in the two or more camera regions 431 and 432, the processor 120 may apply the second processing scheme to the camera image for the two or more camera regions 431 and 432.

FIG. 6B illustrates a region of interest on a frame according to an embodiment of the disclosure.

In a description of FIG. 6B, a component or a structure of an electronic device 101 or a wearable device 200 described through FIGS. 1, 2A, 2B, 3A, and 3B may be referred to.

As illustrated in FIG. 6B, in case that only a camera region 435 is included in a frame 405, a processor 120 may change a processing scheme for a camera image according to where the region of interest (ROI) is located in the camera region 435. However, it is not limited thereto. For example, even in case that the frame 405 includes not only the camera region 435 but also an application region, the processor 120 may change the processing scheme for the camera image according to where the region of interest (ROI) is located in the camera region 435.

For example, the processor 120 may apply a first processing scheme to a camera image (e.g., an image 511) for a region and/or an object in which the region of interest (ROI) is located in the camera region 435, and may apply a second processing scheme to a camera image (e.g., an image 515) for a region and/or an object in which the region of interest (ROI) is not located. Here, the region in which the region of interest (ROI) is located may be a region within a distance designated as the region of interest (ROI). The camera image (e.g., the image 511) for the region and/or the object in which the region of interest (ROI) is located and/or the camera image (e.g., the image 515) for the region and/or the object in which the region of interest (ROI) is not located may be an image separated from one image. However, it is not limited thereto.

Referring to FIG. 6B, the processor 120 may apply the first processing scheme to a camera image for a region 451 in which a region of interest (ROI) 601 is located, and may apply a second processing scheme to a camera image for the camera region 435 except for the region 451 in which the region of interest (ROI) 601 is located. Hereinafter, the camera region 435 except for the region 451 in which the region of interest (ROI) 601 is located may be referred to as a remaining camera region.

For example, the processor 120 may set an FPS of the camera image for the region 451 in which the region of interest (ROI) 601 is located as a first FPS and may set an FPS of the camera image for the remaining camera region as a second FPS. For example, the processor 120 may sample (or subsample) the camera image to the first FPS through some pixels among pixels of the camera 310 corresponding to the region 451 in which the region of interest (ROI) 601 is located. For example, the processor 120 may sample (or subsample) the camera image to the second FPS through some pixels among pixels of the camera 310 corresponding to the remaining camera region.

Referring to FIG. 6B, the processor 120 may apply the first processing scheme to a camera image for an object 455 in which the region of interest (ROI) 605 is located and may apply the second processing scheme to a camera image for the camera region 435 except for the object 455 in which the region of interest (ROI) is located. Hereinafter, the camera region 435 except for the object 455 in which the region of interest (ROI) 605 is located may be referred to as the remaining camera region.

For example, the processor 120 may set an FPS of the camera image for the object 455 in which the region of interest (ROI) 605 is located as the first FPS and may set an FPS of the camera image for the remaining camera region as the second FPS. For example, the processor 120 may sample (or subsample) the camera image to the first FPS through some pixels among pixels of the camera 310 corresponding to the object 455 in which the region of interest (ROI) 605 is located. For example, the processor 120 may sample (or subsample) the camera image to the second FPS through some pixels among pixels of the camera 310 corresponding to the remaining camera region.

Hereinafter, an operation in which the processor 120 varies the processing scheme for the camera image according to a change in the camera region may be described.

The processor 120 may vary the processing scheme for the camera image according to the change in the camera region. Here, the change in the camera region may include movement of the position of the camera region on frames sequentially displayed on the display 330. The change in the camera region may include movement of an object included in the camera region of each of the frames sequentially displayed on the display 330 or a change in a pixel value.

In case that data indicating the change in the camera region is out of a reference range, the processor 120 may select a path 521. For example, in case that the data indicating the change in the camera region is out of the reference range, the processor 120 may set an FPS for the camera image higher than the second FPS and may bypass image processing through an IPE 325 of the camera image. The processor 120 may obtain the camera image for the camera region at the first FPS higher than the second FPS of the application region of the frame outside the camera region and may bypass post-processing of the camera image obtained at the first FPS.

The processor 120 may select a path 525 in case that the data indicating the change in the camera region is in the reference range. In case that the data indicating the change in the camera region is in the reference range, the processor 120 may set the FPS for the camera image to be the same as (or not higher than) the second FPS and may not bypass image processing through the IPE 325 of the camera image. In response to identifying that the data is in the reference range, the processor 120 may obtain the camera image for the camera region as the same (or not high) FPS as the second FPS and may post-process the camera image.

In case that the region of interest (ROI) overlaps the camera region, the processor 120 may vary the processing scheme for the camera image according to the change in the camera region.

In case that the region of interest (ROI) overlaps the camera region, and the data indicating the change in the camera region is out of the reference range, the processor 120 may select the path 521. In case that the region of interest (ROI) overlaps the camera region, and the data indicating the change in the camera region is out of the reference range, the processor 120 may set the FPS for the camera image to be higher than the second FPS and may bypass the image processing through the IPE 325 of the camera image. In response to identifying that data indicating the change in the camera region in which the region of interest (ROI) overlaps is out of the reference range, the processor 120 may obtain the camera image for the camera region at the first FPS higher than the second FPS and may bypass post-processing of the camera image obtained at the high first FPS.

In case that the region of interest (ROI) overlaps the camera region, and the data indicating the change in the camera region is in the reference range, the processor 120 may select the path 525. In case that the region of interest (ROI) overlaps the camera region, and the data indicating the change in the camera region is in the reference range, the processor 120 may set the FPS for the camera image to be the same as (or not higher than) the second FPS and may not bypass image processing through the IPE 325 of the camera image. In response to identifying that the data is in the reference range, the processor 120 may obtain the camera image for the camera region as the same (or not high) FPS as the second FPS and may post-process the camera image.

As described above, the processor 120 may provide the user with a more efficient usage environment considering power consumption by processing a static camera region and a dynamic camera region in different scheme.

Hereinafter, an operation in which the processor 120 varies the processing scheme for the camera image according to brightness of the camera region may be described.

The processor 120 may vary the processing scheme for the camera image according to the brightness of the camera region.

In case that the brightness of the camera region is more than reference brightness, the processor 120 may process the camera image according to the first processing scheme. For example, in case that the brightness of the camera region is more than the reference brightness, the processor 120 may process the camera image based on the path 521 or the path 525.

For example, in response to identifying that the brightness of the camera region is more than the reference brightness, the processor 120 may obtain the camera image at the first FPS and may bypass post-processing of the camera image obtained at the first FPS. In response to identifying that the brightness of the camera region is more than the reference brightness, the processor 120 may obtain the camera image at the second FPS and may post-process the camera image obtained at the second FPS.

For example, in case that the data indicating the change in the camera region having the brightness that is more than the reference brightness is out of the reference range, the processor 120 may process the camera image based on the path 521. For example, in case that the data indicating the change in the camera region having the brightness that is more than the reference brightness is in the reference range, the processor 120 may process the camera image based on the path 525.

In case that the brightness of the camera region is under the reference brightness, the processor 120 may process the camera image according to the second processing scheme. For example, in case that the brightness of the camera region is under the reference brightness, the processor 120 may process the camera image based on the path 531.

For example, in response to identifying that the brightness of the camera region is under the reference brightness, the processor 120 may obtain the camera image at the second FPS and may bypass post-processing of the camera image obtained at the second FPS.

In case that the brightness of the camera region overlapping the region of interest (ROI) is more than the reference brightness, the processor 120 may process the camera image according to the first processing scheme. For example, in case that the brightness of the camera region overlapping the region of interest (ROI) is more than the reference brightness, the processor 120 may process the camera image based on the path 521 or the path 525.

For example, in response to identifying that the brightness of the camera region overlapping the region of interest (ROI) is more than the reference brightness, the processor 120 may obtain the camera image at the first FPS and may bypass post-processing of the camera image obtained at the first FPS. In response to identifying that the brightness of the camera region overlapping the region of interest (ROI) is more than the reference brightness, the processor 120 may obtain the camera image at the second FPS and may post-process the camera image obtained at the second FPS.

In case that the brightness of the camera region overlapping the region of interest (ROI) is under the reference brightness, the processor 120 may process the camera image according to the second processing scheme. For example, in case that the brightness of the camera region is under the reference brightness, the processor 120 may process the camera image based on the path 531.

For example, in response to identifying that the brightness of the camera region overlapping the region of interest (ROI) is under the reference brightness, the processor 120 may obtain the camera image at the second FPS and may bypass post-processing of the camera image obtained at the second FPS.

As described above, the processor 120 may reduce power consumption by applying a low-power processing technique to the camera region based on the user's cognitive ability deteriorating in case that the brightness of the user's region of interest (ROI) is low.

Hereinafter, an operation in which the processor 120 varies the processing scheme for the camera image according to interaction with the user may be described.

The processor 120 may vary the processing scheme for the camera image according to the object included in the camera region. For example, the user may change a direction in which a face faces in a state of wearing the wearable device 200. Accordingly, an object included in a VST region displayed on the display 330 of the wearable device 200 may be changed.

Even in case that the user does not look at the VST region (i.e., in case that the region of interest (ROI) does not overlap the camera region), the processor 120 may change the processing technique for the camera region according to a type of object included in the VST region.

For example, in case that the object included in the camera region is an object designated by the user, the processor 120 may process the camera region based on a first processing technique. In case that an object designated by the user is included in the camera region, the processor 120 may process the camera region based on the first processing technique. For example, when the object designated by the user is included in the camera region, the processor 120 may select the path 521 or the path 525. When the object designated by the user is included in the camera region, the processor 120 may select the path 521 or the path 525 according to a speed at which the user moves the face. For example, in case that the user moves the face faster than a reference speed, the processor 120 may select the path 521. For example, in case that the user moves the face slower than the reference speed, the processor 120 may select the path 525.

For example, in case that the object included in the camera region is not the object designated by the user, the processor 120 may process the camera region based on a second processing technique. In case that the object designated by the user is not included in the camera region, the processor 120 may process the camera region based on a second processing technique.

The processor 120 may provide a frame with high resolution or high FPS for an object previously designated by the user by changing the processing technique of the camera region according to whether the object includes the object designated by the user in the camera region.

Hereinafter, an operation in which the processor 120 varies the processing scheme for the camera image according to the type and size of the object included in the camera region may be described.

The processor 120 may vary the processing scheme for the camera image according to the object included in the camera region. For example, the processor 120 may vary the processing scheme for the camera image according to whether the object included in the camera region is a text object.

The processor 120 may vary the processing scheme for the camera image according to the size of the object included in the camera region. For example, the processor 120 may vary the processing scheme for the camera image according to whether the object included in the camera region is the text object and the size of the text is less than or equal to a reference size.

The processor 120 may vary the processing scheme for the camera image according to amount of the object included in the camera region. For example, the processor 120 may vary the processing scheme for the camera image according to whether the object included in the camera region is the text object and amount of the text is greater than or equal to the reference text amount.

For example, in case that the object included in the camera region is the text object, the processor 120 may process the camera region based on the first processing technique.

In case that the object included in the camera region is the text object and the size of the text is less than or equal to the reference size, the processor 120 may select the path 525. In case that the object included in the camera region is the text object and the size of the text is more than the reference size, the processor 120 may select the path 521.

In case that the object included in the camera region is the text object and the amount of the text is greater than or equal to the reference text amount, the processor 120 may select the path 525. In case that the object included in the camera region is the text object and the amount of the text is less than the reference text amount, the processor 120 may select the path 521.

FIG. 7A illustrates setting resolution according to a region of interest on a frame according to an embodiment of the disclosure. FIG. 7B illustrates setting resolution according to a region of interest on a frame according to an embodiment of the disclosure. FIG. 7C illustrates setting resolution according to a region of interest on a frame according to an embodiment of the disclosure.

A component or a structure of an electronic device 101 or a wearable device 200 described through FIGS. 1, 2A, 2B, 3A, and 3B may be referred to in a description of FIGS. 7A, 7B, and 7C.

A processor 120 may set resolution of the frame differently. The processor 120 may set resolution of the application region differently. The processor 120 may perform foveated rendering.

The processor 120 may vary the resolution of the frame according to a region on the frame in which the region of interest (ROI) is located. The processor 120 may change the resolution of the frame according to the region on the frame in which the region of interest (ROI) is located. For example, the processor 120 may set the resolution of the frame based on a distance from the region of interest (ROI).

The processor 120 may set the resolution of the frame to decrease as the distance from the region of interest (ROI) increases.

The processor 120 may set at least one reference distance. For example, in case that one reference distance is set, the processor 120 may render a region in the reference distance at designated resolution (e.g., reference resolution, or first resolution), and may render a region exceeding the reference distance at resolution (e.g., less than or equal to the first resolution) that is lower than the designated resolution. For example, in case that two or more reference distances are set, the processor 120 may render a first region in a first reference distance at the designated resolution (e.g., reference resolution, or 0^{th} resolution), and may render a second region exceeding the first reference distance and in a second reference distance at the resolution (e.g., less than or equal to the first resolution) that is lower than the designated resolution. An n-th region exceeding a n-1th reference distance and within a n-th reference distance may be rendered at resolution (e.g., n-1th resolution or less) that is lower than a n-2th resolution. Here, n may be an integer of 2 or more. The 0^{th} resolution may be reference resolution. Here, the reference resolution may be resolution of an original image or resolution of an image upscaled from the original image. For example, the reference resolution may have resolution of 4K. However, it is not limited thereto. For example, the reference resolution may have resolution of 8k, 2K, 1080p, or other. The first resolution may have resolution of ½ or ¼ from the reference resolution (e.g., the 0^{th} resolution). The second resolution may have resolution of ½ or ¼ from the first resolution. However, it is not limited thereto.

Referring to FIG. 7A, the processor 120 may render a region within the first reference distance from a region of interest (ROI) 701 at reference resolution 711. The processor 120 may render a region exceeding the first reference distance and within the second reference distance from the region of interest (ROI) 701 at first resolution 713. The processor 120 may render a region exceeding the second reference distance and within a third reference distance from the region of interest (ROI) 701 at second resolution 715. The processor 120 may render a region exceeding the third reference distance and within a fourth reference distance from the region of interest (ROI) 701 at third resolution 717.

The processor 120 may set at least one reference distance based on a state of the wearable device 200. The processor 120 may set the resolution of the frame differently based on the state of the wearable device 200.

For example, the processor 120 may set the resolution of the frame differently based on the remaining battery amount of the wearable device 200. For example, as amount of remaining battery amount of the wearable device 200 decreases, the processor 120 may reduce a region rendered at high resolution. For example, as the amount of remaining battery amount of the wearable device 200 decreases, the processor 120 may reduce a region rendered at the reference resolution 711. For example, as the amount of remaining battery amount of the wearable device 200 decreases, the processor 120 may increase a region rendered at low resolution. For example, as the amount of remaining battery amount of the wearable device 200 increases, the processor 120 may increase the region rendered at the high resolution. For example, as the amount of remaining battery amount of the wearable device 200 increases, the processor 120 may increase the region rendered at the reference resolution 711. For example, as the amount of remaining battery amount of the wearable device 200 increases, the processor 120 may reduce the region rendered at the low resolution.

For example, the processor 120 may set the resolution of the frame differently based on temperature of the wearable device 200. For example, as the temperature of the wearable device 200 increases, the processor 120 may reduce the region rendered at the high resolution. For example, as the temperature of the wearable device 200 increases, the processor 120 may reduce the region rendered at the reference resolution 711. For example, as the temperature of the wearable device 200 increases, the processor 120 may increase the region rendered at the low resolution. For example, as the temperature of the wearable device 200 decreases, the processor 120 may increase the region rendered at the high resolution. For example, as the temperature of the wearable device 200 decreases, the processor 120 may increase the region rendered at the reference resolution 711. For example, as the temperature of the wearable device 200 decreases, the processor 120 may reduce the region rendered at the low resolution. However, it is not limited thereto.

The processor 120 may set at least one reference distance based on the user's usage environment of the wearable device 200. For example, the processor 120 may set the resolution of the frame differently based on a change in the user's gaze. For example, the processor 120 may reduce the region rendered at the high resolution in response to data indicating the change in the user's gaze exceeding a reference range. For example, the processor 120 may reduce the region rendered at the reference resolution 711 in response to the data indicating the change in the user's gaze exceeding the reference range. For example, the processor 120 may increase the region rendered at the low resolution in response to the data indicating the change in the user's gaze exceeding the reference range. For example, the processor 120 may increase the region rendered at the high resolution in response to the data indicating the change in the user's gaze being within the reference range. For example, the processor 120 may increase the region rendered at the reference resolution 711 in response to the data indicating the change in the user's gaze being within the reference range. For example, the processor 120 may reduce the region rendered at the low resolution in response to the data indicating the change in the user's gaze being within the reference range. However, it is not limited thereto.

For example, the processor 120 may set the resolution of the frame differently based on a type of a running application 146. For example, in case that the running application 146 requires a high FPS (e.g., a game application), the processor 120 may reduce the region rendered at the high resolution. For example, in case that the running application 146 requires the high FPS, the processor 120 may reduce the region rendered at the reference resolution 711. For example, in case that the running application 146 requires the high FPS, the processor 120 may increase the region rendered at the low resolution. For example, in case that the running application 146 requires a low FPS (e.g., a document writing application), the processor 120 may increase the region rendered at the high resolution. For example, in case that the running application 146 requires the low FPS, the processor 120 may increase the region rendered at the reference resolution 711. For example, in case that the running application 146 requires the low FPS, the processor 120 may reduce the region rendered at the low resolution. However, it is not limited thereto.

Comparing FIGS. 7A and 7B, in FIG. 7A, the region rendered at the reference resolution 711 may be wider than the region rendered at the reference resolution 711 in FIG. 7B. Referring to FIG. 7B, the region rendered at a fourth resolution 719 that does not exist in FIG. 7A may be included.

Comparing FIGS. 7B and 7C, in FIGS. 7B and 7C, the region rendered at the reference resolution 711 may be the same. In other words, in case that the region rendered at the reference resolution 711 is limited to the minimum region, the processor 120 may lower resolution of other regions. For example, in FIG. 7C, the region rendered at the fourth resolution 719 may be wider than in FIG. 7B.

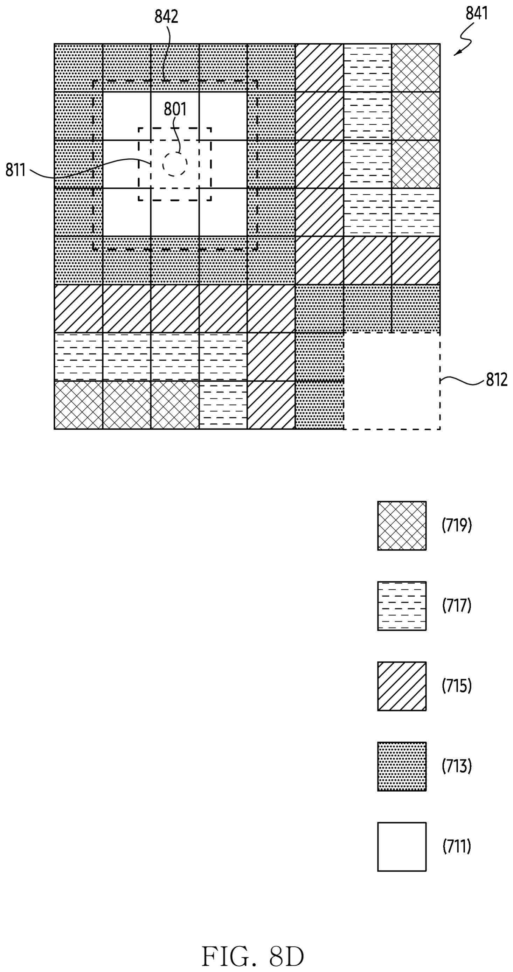

FIG. 8A illustrates setting resolution according to a region of interest on a frame according to an embodiment of the disclosure. FIG. 8B illustrates setting resolution according to a region of interest on a frame according to an embodiment of the disclosure. FIG. 8C illustrates setting resolution according to a region of interest on a frame according to an embodiment of the disclosure. FIG. 8D illustrates setting resolution according to a region of interest on a frame according to an embodiment of the disclosure.

A component or a structure of an electronic device 101 or a wearable device 200 described through FIGS. 1, 2A, 2B, 3A, and 3B may be referred to in a description of FIGS. 8A, 8B, 8C, and 8D.

A processor 120 may set resolution of the frame differently. The processor 120 may set resolution of the application region differently. The processor 120 may perform foveated rendering. The processor 120 may perform foveated rendering on the application region. For example, the processor 120 may perform foveated rendering on an application region distinct from a camera region in the frame. However, it is not limited thereto. For example, the processor 120 may also perform foveated rendering on the camera region.

Referring to FIG. 8A, rendering may be performed so that the resolution becomes lower as the distance from a region of interest (ROI) 801 increases. For example, the processor 120 may perform rendering on an application region excluding camera regions 811 and 812 in the frame so that the resolution becomes lower as the distance from the region of interest (ROI) 801 increases. For example, the processor 120 may render a region within a first reference distance from the region of interest (ROI) 801 at first resolution 713. The processor 120 may render a region within a second reference distance exceeding the first reference distance from the region of interest (ROI) 801 at second resolution 715. The processor 120 may render a region within a third reference distance exceeding the second reference distance from the region of interest (ROI) 801 at third resolution 717. The processor 120 may render a region within a fourth reference distance exceeding the third reference distance from the region of interest (ROI) 801 at fourth resolution 719. However, it is not limited thereto.

The processor 120 may vary the resolution of the application region according to a distance from the camera region on the frame. For example, the processor 120 may set resolution of an application region adjacent to the camera region to be higher than resolution of an application region away from the camera region. For example, the processor 120 may set the resolution of regions adjacent to the camera region among regions that are substantially the same distance away from the region of interest (ROI) to be higher than resolution of regions not adjacent to the camera region. For example, as for resolution of a specific application region, higher resolution among first resolution determined by the distance from the camera region in which the region of interest (ROI) is located, or second resolution determined by the distance from the camera region in which the region of interest (ROI) is not located, may be applied.

Referring to FIG. 8B, in case of frames 821 and 825, since a partial region 822 of the application region is adjacent to a camera region 812, the processor 120 may set resolution of the partial region 822 to be higher than resolution of a surrounding region. For example, in case of a frame 821, the processor 120 may render the camera region 811 in which the region of interest (ROI) 801 is located at reference resolution 711, may render the region within the second reference distance from the camera region 811 at the first resolution 713, may render the region within the third reference distance exceeding the second reference distance from the camera region 811 at the second resolution 715, may render the region within the fourth reference distance exceeding the third reference distance from the camera region 811 at the third resolution 717, and may render the region within the fifth reference distance exceeding the fourth reference distance from the camera region 812 at the fourth resolution 719.

In addition, for example, in case of the frame 821, the processor 120 may render the camera region 812 in which the region of interest (ROI) 801 is not located at the reference resolution 711, may render the region within the second reference distance from the camera region 812 at the first resolution 713, may render the region within the third reference distance exceeding the second reference distance from the camera region 812 at the second resolution 715, may render the region within the fourth reference distance exceeding the third reference distance from the camera region 812 at the third resolution 717, and may render the region within the fifth reference distance exceeding the fourth reference distance from the camera region 812 at the fourth resolution 719.

As for resolution of a specific region, higher resolution among resolution determined according to a distance from a camera region 813 or resolution determined according to a distance from a camera region 814 may be applied.

Referring to FIG. 8C, in case of a frame 831, since partial regions 833 and 834 of the application region are adjacent to the camera region 814, the processor 120 may set resolution of the partial regions 833 and 834 to be higher than resolution of the surrounding regions. In case of a frame 832, since partial regions 835 and 836 of the application region are adjacent to the camera region 814, the processor 120 may set resolution of the partial regions 835 and 836 to be higher than the resolution of the surrounding regions. For example, in the case of the frame 831, the processor 120 may render the camera region 813 in which the region of interest (ROI) 801 is located at the reference resolution 711, may render the region within the second reference distance from the camera region 813 at the first resolution 713, may render the region within the third reference distance exceeding the second reference distance from the camera region 813 at the second resolution 715, may render the region within the fourth reference distance exceeding the third reference distance from the camera region 813 at the third resolution 717, and may render the region within the fifth reference distance exceeding the fourth reference distance from the camera region 814 at the fourth resolution 719.

In addition, for example, in case of the frame 831, the processor 120 may render the camera region 814 in which the region of interest (ROI) 801 is not located at the reference resolution 711, may render the region within the second reference distance from the camera region 814 at the first resolution 713, may render the region within the third reference distance exceeding the second reference distance from the camera region 814 at the second resolution 715, may render the region within the fourth reference distance exceeding the third reference distance from the camera region 814 at the third resolution 717, and may render the region within the fifth reference distance exceeding the fourth reference distance from the camera region 814 at the fourth resolution 719.

As for the resolution of the specific region, higher resolution among the resolution determined according to the distance from the camera region 813 or the resolution determined according to the distance from the camera region 814 may be applied.

The processor 120 may set the resolution of regions adjacent to the camera region differently based on a state of the wearable device 200. Referring to FIG. 8B, the processor 120 may set the resolution of the partial region 822 of the frame 821 in case that remaining amount of the battery 189 is greater than or equal to the reference remaining amount to be higher than resolution of the partial region 822 of the frame 825 in case that the remaining amount of the battery 189 is less than the reference remaining amount. For example, the second resolution in case that the remaining amount of the battery 189 is less than the reference remaining amount of the battery 189 may be lower than the second resolution in case that the remaining amount of the battery 189 is greater than or equal to the reference remaining amount.

For example, in case that the remaining amount of the battery 189 is less than the reference remaining amount, the resolution of the partial region 822 of the frame 825 may be lower than the resolution of the partial region 822 of the frame 821 in case that the remaining amount of the battery 189 is greater than or equal to the reference remaining amount. For example, in case that the remaining amount of the battery 189 is less than the reference remaining amount, the processor 120 may render a region within the second reference distance from the camera region 812 in which the region of interest (ROI) 801 is not located at the third resolution 717 and may render a region exceeding the second reference distance from the camera region 812 at the fourth resolution 719. Even in case of the frame 825, as for the resolution of the specific region, higher resolution among resolution determined according to a distance from the camera region 811, or resolution determined according to a distance from the camera region 812 may be applied.

Referring to FIG. 8C, the processor 120 may set the resolution of the partial regions 833 and 834 of the frame 831 in case that the remaining battery amount is greater than or equal to the reference remaining amount, to be higher than the resolution of the partial regions 835 and 836 of the frame 832 in case that the remaining battery amount is less than the reference remaining amount.

For example, in case that the remaining amount of the battery 189 is less than the reference remaining amount, the resolution of some regions 835 and 836 of the frame 832 may be lower than the resolution of partial regions 833 and 834 of the frame 831 in case that the remaining amount of the battery 189 is greater than or equal to the reference remaining amount. For example, in case that the remaining amount of the battery 189 is less than the reference remaining amount, the processor 120 may render a region within the second reference distance from the camera region 814 in which the region of interest (ROI) 801 is not located at the third resolution 717 and may render a region exceeding the second reference distance from the camera region 814 at the fourth resolution 719. Even in case of the frame 825, as for the resolution of the specific region, higher resolution among the resolution determined according to the distance from the camera region 813 or the resolution determined according to the distance from the camera region 814 may be applied.

Referring to FIGS. 8B and 8C, it is illustrated that the processor 120 determines the resolution of the camera region based on a distance away from the edges of the camera regions 811 and 813 in which the region of interest (ROI) 801 is located. However, it is not limited thereto. For example, the processor 120 may determine the resolution of the camera region based on a distance away from the region of interest (ROI) 801 located in the camera regions 811 and 813. In this case, resolution of an upper region of the camera region 813 in which the region of interest (ROI) 801 is located in the frames 831 and 832 may be higher than resolution of a lower region of the camera region 813.

The processor 120 may determine the resolution of the application region based on the size of the camera region. For example, in case that size of the camera region is smaller than a reference camera region, the processor 120 may set the resolution of the application region as the reference resolution. For example, the processor 120 may set the resolution of the application region from the camera region to the reference camera region as the reference resolution.

Referring to FIG. 8D, in frame 841, the processor 120 may set resolution of an application region 842 surrounding the camera region 811 as the reference resolution. Here, the region including the camera region 811 and the application region 842 may be the reference camera region. However, it is not limited thereto.

FIG. 9A illustrates setting resolution according to a region of interest on a frame according to an embodiment of the disclosure. FIG. 9B illustrates setting resolution according to a region of interest on a frame according to an embodiment of the disclosure.

A component or a structure of an electronic device 101 or a wearable device 200 described through FIGS. 1, 2A, 2B, 3A, and 3B may be referred to in a description of FIGS. 9A and 9B.

Compared with FIGS. 7B and 7C, FIGS. 9A and 9B illustrate an example in which a processor 120 sets resolution of frames 911, 912, 913, 921, 922, and 923 in which two or more camera regions 811, 812, 813, and 814 exist based on a state of the wearable device 200.

When comparing the frames 911, 912, and 913 of FIG. 9A, the resolution may be lowered in an order of the frame 911, the frame 912, and the frame 913. For example, the processor 120 may set resolution of an application region to a higher resolution as a remaining battery amount is lower.

For example, in a first remaining battery amount situation where the remaining battery amount is the highest, the processor 120 may set resolution of an application region surrounding a camera region 811 in which a region of interest (ROI) 801 is located in the frame 911 to be higher than resolution of an application region surrounding a camera region 812 in which the region of interest (ROI) 801 is not located. For example, the processor 120 may determine the resolution of the application region by dividing it into a first number of steps (e.g., step 4) according to a distance from the region of interest (ROI) 801 and/or the camera regions 811 and 812. For example, in case of the frame 911, the processor 120 may render a region within a second reference distance from the camera region 811 in which the region of interest (ROI) 801 is located at first resolution 713, may render a region within a third reference distance exceeding the second reference distance from the camera region 811 at second resolution 715, may render a region within a fourth reference distance exceeding the third reference distance from the camera region 811 at third resolution 717, and may render a region within a fifth reference distance exceeding the fourth reference distance from the camera region 812 at fourth resolution 719. In case of the frame 911, the processor 120 may render a region within the second reference distance from the camera region 812 in which the region of interest (ROI) 801 is not located at the first resolution 713, may render a region within the third reference distance exceeding the second reference distance from the camera region 812 at the second resolution 715, may render a region within the fourth reference distance exceeding the third reference distance from the camera region 812 at the third resolution 717, and may render a region within the fifth reference distance exceeding the fourth reference distance from the camera region 812 at the fourth resolution 719.

For example, in a second remaining battery amount situation where the remaining battery amount is the second highest, the processor 120 may equally set resolution of an application region surrounding the camera region 811 in which the region of interest (ROI) 801 is located in the frame 912 and resolution of an application region surrounding the camera region 812 in which the region of interest (ROI) 801 is not located as the intermediate second resolution 715. For example, the processor 120 may determine the resolution of the application region by dividing it into a second number of steps (e.g., 3 steps), which is less than the first number, according to the distance from the region of interest (ROI) 801 and/or the camera regions 811 and 812. For example, in case of the frame 912, the processor 120 may render a region within the second reference distance from the camera region 811 in which the region of interest (ROI) 801 is located at the second resolution 715, may render a region within the third reference distance exceeding the second reference distance from the camera region 811 at the third resolution 717, and may render a region exceeding the third reference distance from the camera region 811 at the fourth resolution 719. In case of the frame 912, the processor 120 may render a region within the second reference distance from the camera region 812 in which the region of interest (ROI) 801 is not located at the second resolution 715, may render a region within the third reference distance exceeding the second reference distance from the camera region 812 at the third resolution 717, and may render a region exceeding the third reference distance from the camera region 812 at the fourth resolution 719.

For example, in a third remaining battery amount situation where the remaining battery amount is the lowest, the processor 120 may equally set the resolution of the application region surrounding the camera region 811 in which the region of interest (ROI) 801 is located in the frame 913 and the resolution of the application region surrounding the camera region 812 in which the region of interest (ROI) 801 is not located as the low-level resolution 717. For example, the processor 120 may determine the resolution of the application region by dividing it into a third number of steps (e.g., 2 steps), which is less than the second number, according to the distance from the region of interest (ROI) 801 and/or the camera regions 811 and 812. For example, in case of the frame 913, the processor 120 may render the region within the second reference distance from the camera region 811 in which the region of interest (ROI) 801 is located at the third resolution 717 and may render the region exceeding the second reference distance from the camera region 811 at the fourth resolution 719. In case of the frame 913, the processor 120 may render the region within the second reference distance from the camera region 812 in which the region of interest (ROI) 801 is not located at the third resolution 717 and may render the region exceeding the second reference distance from the camera region 812 at the fourth resolution 719.

For example, in the third remaining battery amount situation where the remaining battery amount is the lowest, the processor 120 may set the resolution of the remaining regions to the resolution 719 of the lowest level. Here, the remaining regions may be regions of an application other than application regions surrounding the camera regions 811 and 812. However, it is not limited thereto. For example, the processor 120 may set the resolution of the frame 911, the frame 912, and the frame 913 differently based on temperature of the wearable device 200.

The resolution of the frames 921, 922, and 923 of FIG. 9B may be lowered in an order of the frame 921, the frame 922, and the frame 923, similar to the frames 911, 912, and 913 of FIG. 9A.

For example, in case of the frame 921, the processor 120 may determine the resolution of the application region by dividing it into the first number of steps (e.g., step 4) according to the distance from the region of interest (ROI) 801 and/or the camera regions 813 and 814.

For example, in case of the frame 922, the processor 120 may determine the resolution of the application region by dividing it into the second number of steps (e.g., 3 steps), which is less than the first number according to the distance from the region of interest (ROI) 801 and/or the camera regions 813 and 814.

For example, in case of the frame 923, the processor 120 may determine the resolution of the application region by dividing it into the second number of steps (e.g., 3 steps), which is less than the first number according to the distance from the region of interest (ROI) 801 and/or the camera regions 813 and 814.

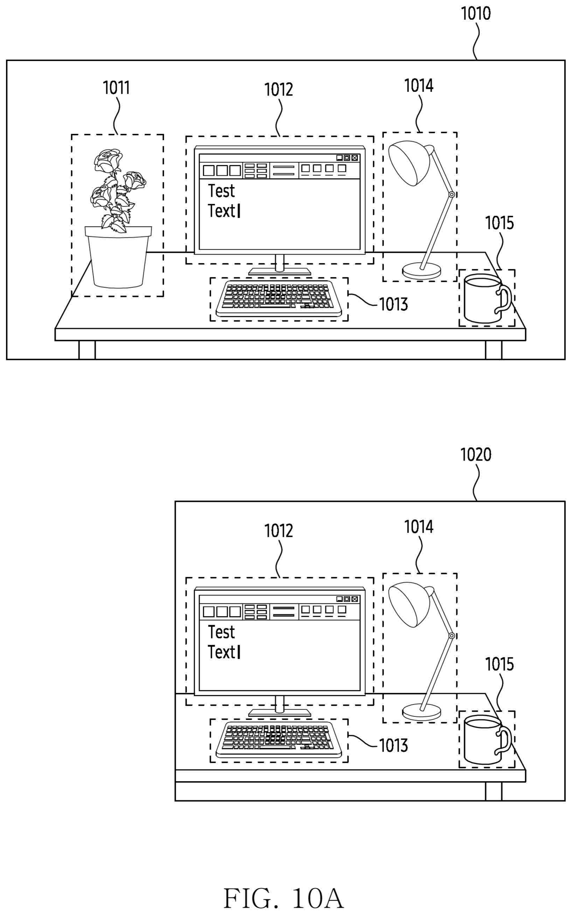

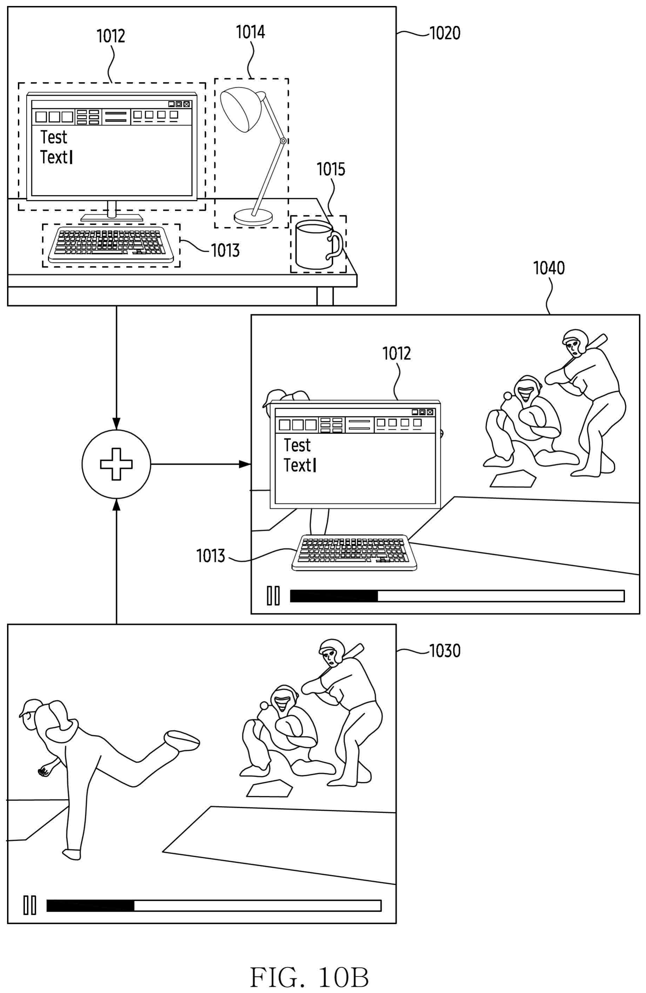

FIG. 10A illustrates objects existing in an environment surrounding a wearable device according to an embodiment of the disclosure. FIG. 10B illustrates a synthesis between a camera image and an application image according to an embodiment of the disclosure.

A component or a structure of an electronic device 101 or the wearable device 200 described through FIGS. 1, 2A, 2B, 3A, and 3B may be referred to in a description of FIGS. 10A and 10B.

FIG. 10A illustrates an environment 1010 surrounding the wearable device 200 and a camera image 1020 of the surrounding environment 1010 obtained by the camera 310.

Referring to FIG. 10A, one or more objects 1011, 1012, 1013, 1014, and 1015 may exist in the environment 1010 surrounding the wearable device 200. A processor 120 may obtain a camera image 1020 of a portion of the environment 1010 surrounding the wearable device 200 through the camera 310. The camera image 1020 may include some objects 1012, 1013, 1014, and 1015 among the objects 1011, 1012, 1013, 1014, and 1015 in the surrounding environment 1010.

For example, the processor 120 may set a camera region based on a region including the objects 1012, 1013, 1014, and 1015. For example, the processor 120 may identify some objects 1012, 1013, 1014, and 1015 in the camera image 1020. For example, the processor 120 may set the camera region 1020 based on some identified objects 1012, 1013, 1014, and 1015.

The processor 120 may set the camera region based on object information included in the camera image 1020. For example, in response to an object preset by the user being identified in the camera image 1020, the processor 120 may set a region on the frame corresponding to the region of the identified object as the camera region. For example, in case that the object preset by the user is a computer and a keyboard, the processor 120 may set the object 1012 and regions on the frame corresponding to regions of the object 1013 in some objects 1012, 1013, 1014, and 1015 included in the camera image 1020, as the camera region. Here, the object information may indicate a type or name of the identified object.

Referring to FIG. 10B, the processor 120 may generate a frame 1040 including a partial region of the camera image 1020.

For example, the processor 120 may generate the frame 1040 based on the camera image 1020 and an application image 1030. For example, the processor 120 may generate the frame 1040 by synthesizing the camera image 1020 and the application image 1030.

For example, the processor 120 may generate the frame 1040 by overlapping (or synthesizing) the camera region with the application image 1030. For example, the processor 120 may synthesize a region corresponding to some objects 1012 and 1013 identified in the camera image 1020 into a region on the corresponding application image 1030.

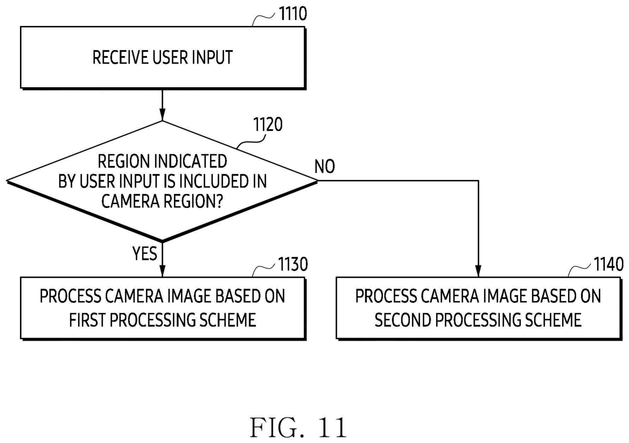

FIG. 11 is a flowchart of a method executed in a wearable device according to an embodiment of the disclosure.

In the description of FIG. 11, a component or a structure of an electronic device 101 or the wearable device 200 described through FIGS. 1, 2A, 2B, 3A, and 3B may be referred to.

In the following embodiment, each operation may be performed in sequence, but is not necessarily performed in sequence. For example, an order of each operation may be changed, and at least two operations may be performed in parallel.

Referring to FIG. 11, in operation 1110, a processor 120 may receive a user input. The user input may include a user's gaze. Here, the user's gaze may be identified based on images obtained by cameras 240-1 and 240-2 for ET. The images obtained by the cameras 240-1 and 240-2 may be glint images. However, it is not limited thereto. The user input may include interaction with the user's input module 150. For example, the processor 120 may identify a region of interest (ROI) based on the object indicated by the user's gesture input.

In operation 1120, the processor 120 may identify whether a region indicated by the user input is included in a camera region. Here, the region indicated by the user input may be the region of interest (ROI).

In operation 1120, in case that the region indicated by the user input is included in the camera region ('Yes') the processor 120 may perform operation 1130. In operation 1120, in case that the region indicated by the user input is not included in the camera region ('No') the processor 120 may perform operation 1140.

In operation 1130, the processor 120 may process the camera image based on a first processing scheme.

For example, the first processing scheme may be a scheme in which the processor 120 changes a frame rate (or FPS) of an ISP 320. For example, the first processing scheme may be a scheme in which the processor 120 sets a generation speed (or sampling rate, FPS) of the camera image to be high. For example, the first processing scheme may be a method in which the processor 120 sets an FPS for the camera image higher than a second FPS.

For example, the first processing scheme may be a scheme in which the processor 120 changes the frame rate (or FPS) of the ISP 320 and bypasses image processing through an IPE 325 of the camera image. For example, the first processing scheme may be a scheme in which the processor 120 sets the FPS for the camera image higher than the second FPS and bypasses image processing through the IPE 325 of the camera image. Here, bypassing the IPE 325 may mean that the camera image processed through an IFE engine 321 is transmitted directly from the IFE engine 321 to the processor 120 or indirectly through the memory 130. Bypassing the IPE 325 may mean displaying a frame based on the camera image processed by the IFE engine 321 through the display 330. Bypassing the IPE 325 may mean that image processing through the IPE 325 is not performed on the camera image processed through the IFE engine 321. Bypassing the IPE 325 may mean that the camera image pre-processed through the IFE engine 321 is not post-processed through the IPE 325.

For example, the first processing scheme may be a scheme in which the processor 120 sets the FPS for the camera image to be the same (or not high) as the second FPS and does not bypass image processing through the IPE 325 of the camera image. Here, not bypassing the IPE 325 may mean that the camera image processed through the IFE engine 321 is transmitted directly from the IFE engine 321 to the IPE 325 or indirectly through the memory 130. Not bypassing the IPE 325 may mean that displaying a frame based on the camera image processed by the IFE engine 321 and the IPE 325, through the display 330. Not bypassing the IPE 325 may mean that image processing through the IPE 325 is performed on the camera image processed through the IFE engine 321. Not bypassing the IPE 325 may mean post-processing the camera image pre-processed through the IFE engine 321 through the IPE 325.

In operation 1140, the processor 120 may process the camera image based on a second processing scheme.

For example, the second processing scheme may be a scheme in which the processor 120 changes the frame rate (or FPS) of the ISP 320. For example, the second processing scheme may be a scheme in which the processor 120 sets the generation speed (or sampling rate, FPS) of the camera image to be low. For example, the second processing scheme may be a scheme in which the processor 120 sets the FPS for the camera image to be the same as (or not high) the second FPS.

For example, the second processing scheme may be a scheme of changing the frame rate (or FPS) of the ISP 320 and bypassing image processing through the IPE 325 of the camera image. For example, the second processing scheme may be a scheme in which the processor 120 sets the FPS for the camera image to be the same as (or not high) as the second FPS and bypasses image processing through the IPE 325 of the camera image.

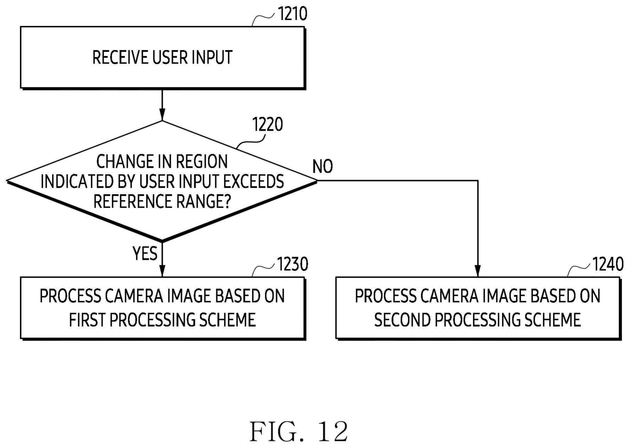

FIG. 12 is a flowchart of a method executed in a wearable device according to an embodiment of the disclosure.

In a description of FIG. 12, a component or a structure of an electronic device 101 or the wearable device 200 described through FIGS. 1, 2A, 2B, 3A, and 3B may be referred to.

In the following embodiment, each operation may be performed in sequence, but is not necessarily performed in sequence. For example, an order of each operation may be changed, and at least two operations may be performed in parallel.

Referring to FIG. 12, in operation 1210, a processor 120 may receive a user input. The user input may include a user's gaze. The user input may include interaction with the user's input module 150.

In operation 1220, the processor 120 may identify whether a change in a region indicated by the user input exceeds the reference range. Here, a change in a camera region may include movement of a position of the camera region on frames sequentially displayed on the display 330. The change in the camera region may include movement of an object included in the camera region of each of the frames sequentially displayed on the display 330 or a change in a pixel value.

In operation 1220, in case that the change in the region indicated by the user input exceeds the reference range ('Yes'), the processor 120 may perform operation 1230. In operation 1220, in case that the change in the region indicated by the user input does not exceed the reference range ('No'), the processor 120 may perform operation 1240.

In operation 1230, the processor 120 may process the camera image based on a first processing scheme.

In operation 1240, the processor 120 may process the camera image based on a second processing scheme.

A wearable device 200 as described above may comprise the camera 310. According to an embodiment, the wearable device 200 may comprise the display 330. According to an embodiment, the wearable device 200 may comprise an image signal processor 320. According to an embodiment, the wearable device 200 may comprise at least one processor 120 comprising processing circuitry. According to an embodiment, the wearable device 200 may comprise the memory 130, comprising one or more storage mediums, storing instructions. According to an embodiment, the instructions that, when executed by the at least one processor 120 individually or collectively, may cause the wearable device 200 to, based on user input, identify a region of interest (ROI) from a first frame displayed through the display 330. According to an embodiment, a camera region included in the first frame may correspond to at least partial region of a first camera image obtained through the camera 310 at a first time point. According to an embodiment, the instructions that, when executed by the at least one processor 120 individually or collectively, may cause the wearable device 200 to, based on the ROI overlapping the camera region, control the image signal processor 320 to process a second camera image obtained at a second time point after the first time point by a first processing scheme. According to an embodiment, the instructions that, when executed by the at least one processor 120 individually or collectively, may cause the wearable device 200 to, based on the ROI being outside of the camera region, control the image signal processor 320 to process the second camera image by a second processing scheme that is distinct from the first processing scheme. According to an embodiment, the instructions that, when executed by the at least one processor 120 individually or collectively, may cause the wearable device 200 to display, through the display 330, a second frame including the camera region corresponding to at least partial region of the processed second camera image.

According to an embodiment, the wearable device 200 may further comprise a sensor 176. According to an embodiment, the instructions that, when executed by the at least one processor 120 individually or collectively, may cause the wearable device 200 to obtain a gaze of a user identified through the sensor 176 as the user input. According to an embodiment, the instructions that, when executed by the at least one processor 120 individually or collectively, may cause the wearable device 200 to identify the ROI based on the gaze of the user obtained as the user input.

According to an embodiment, the instructions that, when executed by the at least one processor 120 individually or collectively, may cause the wearable device 200 to, in response to identifying that data indicating a change of pixel values of the camera region which is overlapped with the ROI is out of a reference range, control the image signal processor 320 to obtain the second camera image for the camera region at a first frame per second (FPS) higher than a second FPS of another region outside of the camera region of the second frame. According to an embodiment, the instructions that, when executed by the at least one processor 120 individually or collectively, may cause the wearable device 200 to, in response to identifying that the data is within the reference range, control the image signal processor 320 to obtain the second camera image for the camera region at the second FPS.

According to an embodiment, the instructions that, when executed by the at least one processor 120 individually or collectively, may cause the wearable device 200 to, in response to identifying that the data is out of the reference range, control the image signal processor 320 to bypass a post-processing on the second camera image for the camera region obtained at the first FPS.

According to an embodiment, the instructions that, when executed by the at least one processor 120 individually or collectively, may cause the wearable device 200 to, in response to identifying that the data is within the reference range, control the image signal processor 320 to post-process the second camera image for the camera region obtained at the second FPS.

According to an embodiment, the instructions that, when executed by the at least one processor 120 individually or collectively, may cause the wearable device 200 to, based on the ROI being outside of the camera region, control the image signal processor 320 to obtain the second camera image at the second FPS, and bypass the post-processing on the second camera image for the camera region obtained at the second FPS.

According to an embodiment, the instructions that, when executed by the at least one processor 120 individually or collectively, may cause the wearable device 200 to, in response to identifying that brightness of the camera region overlapped with the ROI is more than reference brightness, control the image signal processor 320 to process the second camera image obtained at the second time point after the first time point by the first processing scheme. According to an embodiment, the instructions that, when executed by the at least one processor 120 individually or collectively, may cause the wearable device 200 to, in response to identifying that brightness of the camera region overlapped with the ROI is under reference brightness, control the image signal processor 320 to process the second camera image for the camera region by the second processing scheme.

According to an embodiment, the instructions that, when executed by the at least one processor 120 individually or collectively, may cause the wearable device 200 to display, on the display 330, the second frame based on an application image obtained by executing an application. According to an embodiment, the second frame may include the camera region based on the second camera image and an application region based on the application image.

According to an embodiment, the camera region may be set based on a previously set camera region indicated by usage information of the application.

According to an embodiment, the instructions that, when executed by the at least one processor 120 individually or collectively, may cause the wearable device 200 to identify at least one object included in the first camera image. According to an embodiment, the instructions that, when executed by the at least one processor 120 individually or collectively, may cause the wearable device 200 to identify an object of a designated type from the identified at least one object. According to an embodiment, the instructions that, when executed by the at least one processor 120 individually or collectively, may cause the wearable device 200 to set the camera region based on a region of the object of the designated type.

As described above, the method may be executed by the wearable device 200 including the camera 310, and the display 330. According to an embodiment, the method may comprise, based on user input, identifying a region of interest (ROI) from a first frame displayed through the display 330. According to an embodiment, a camera region included in the first frame may correspond to at least partial region of a first camera image obtained through the camera 310 at a first time point. The method may comprise, based on the ROI overlapping the camera region, processing a second camera image obtained at a second time point after the first time point by a first processing scheme. The method may comprise, based on the ROI being outside of the camera region, processing the second camera image by a second processing scheme that is distinct from the first processing scheme. The method may comprise, displaying, through the display 330, a second frame including the camera region corresponding to at least partial region of the processed second camera image.

As described above, a non-transitory computer readable storage medium may store one or more programs 140 including instructions. According to an embodiment, the instructions, when executed by a processor 120 of a wearable device 200 including the camera 310 and the display 330, may be caused to identify a region of interest (ROI) in the first frame outputted through the display 330 based on user input. A camera region included in the first frame may correspond to at least partial region of a first camera image obtained through the camera 310 at a first time point. The instructions, when executed by the processor 120, may cause the wearable device 200 to, based on the ROI overlapping the camera region, control the image signal processor 320 to process a second camera image obtained at a second time point after the first time point by a first processing scheme. The instructions, when executed by the processor, may cause the wearable device 200 to, based on the ROI being outside of the camera region, control the image signal processor 320 to process the second camera image by a second processing scheme that is distinct from the first processing scheme. The instructions, when executed by the processor 120, may cause the wearable device 200 to display, through the display 330, a second frame including the camera region corresponding to at least partial region of the processed second camera image.

As described above, a wearable device 200 may comprise the camera 310. According to an embodiment, the wearable device 200 may comprise the display 330. According to an embodiment, the wearable device 200 may comprise an image signal processor 320. According to an embodiment, the wearable device 200 may comprise at least one processor 120 comprising processing circuitry. According to an embodiment, the wearable device 200 may comprise the memory 130, comprising one or more storage mediums, storing instructions. According to an embodiment, the instructions that, when executed by the at least one processor 120 individually or collectively, may cause the wearable device 200 to display, on the display 330, a first frame, that includes, as a camera region, at least partial region of a first camera image of environment surrounding the wearable device 200 and obtained through the camera 310 at a first time point. According to an embodiment, the instructions that, when executed by the at least one processor 120 individually or collectively, may cause the wearable device 200 to, during the first frame being displayed on the display 330, identify the camera region within the frame corresponding to a region of interest (ROI). According to an embodiment, the instructions that, when executed by the at least one processor 120 individually or collectively, may cause the wearable device 200 to, in response to identifying that data indicating a change of pixel values of the camera region is out of a reference range, control the image signal processor 320 to obtain camera images for the camera region at a first frame per second (FPS) higher than a second FPS of a region of the frame outside of the camera region. According to an embodiment, the instructions that, when executed by the at least one processor 120 individually or collectively, may cause the wearable device 200 to, in response to identifying that the data is within the reference range, control the image signal processor 320 to obtain the camera images for the camera region at the second FPS.

According to an embodiment, the instructions that, when executed by the at least one processor 120 individually or collectively, may cause the wearable device 200 to, in response to identifying that the data is out of the reference range, control the image signal processor 320 to bypass a post-processing on the camera images for the camera region obtained at the first FPS.

According to an embodiment, the instructions that, when executed by the at least one processor 120 individually or collectively, may cause the wearable device 200 to, in response to identifying that the data is within the reference range, control the image signal processor 320 to post-process the camera images obtained at the second FPS.

According to an embodiment, he wearable device 200 may further comprise a sensor 176. According to an embodiment, the instructions that, when executed by the at least one processor 120 individually or collectively, may cause the wearable device 200 to obtain a gaze of a user through the sensor 176 as the user input. According to an embodiment, the instructions that, when executed by the at least one processor 120 individually or collectively, may cause the wearable device 200 to identify the ROI based on the gaze of the user obtained as the user input.

According to an embodiment, the instructions that, when executed by the at least one processor 120 individually or collectively, may cause the wearable device 200 to in response to identifying that brightness of the camera region is under reference brightness, control the image signal processor 320 to obtain the camera images for the camera region at the second FPS, and bypass the post-processing on the camera images for the camera region obtained at the second FPS.

According to an embodiment, the instructions that, when executed by the at least one processor 120 individually or collectively, may cause the wearable device 200 to, in response to identifying that brightness of the camera region is more than the reference brightness, control the image signal processor 320 to process the camera region based on the data indicating the change of the camera region.

According to an embodiment, the instructions that, when executed by the at least one processor 120 individually or collectively, may cause the wearable device 200 to display, on the display 330, the first frame based on a first application image obtained by executing an application. According to an embodiment, the first frame may include the camera region based on the first camera image and an application region based on the first application image. According to an embodiment, the camera region of the first frame may be overlapped with the application region.

According to an embodiment, the camera region may be set based on a previously set camera region indicated by usage information of the application.

According to an embodiment, the instructions that, when executed by the at least one processor 120 individually or collectively, may cause the wearable device 200 to identify at least one object based on the camera images. According to an embodiment, the instructions that, when executed by the at least one processor 120 individually or collectively, may cause the wearable device 200 to identify an object of a designated type from the identified at least one object. According to an embodiment, the instructions that, when executed by the at least one processor 120 individually or collectively, may cause the wearable device 200 to set the camera region based on a region of the object of the designated type.

As described above, the method may be executed by a wearable device 200 including the camera 310 and the display 330. According to an embodiment, the method may comprise displaying, on the display 330, a first frame, that includes, as a camera region, at least partial region of a first camera image of environment surrounding the wearable device 200 and obtained through the camera 310 at a first time point. According to an embodiment, the method may comprise, during the first frame being displayed on the display 330, identifying the camera region within the frame corresponding to a region of interest (ROI). According to an embodiment, the method may comprise, in response to identifying that data indicating a change of pixel values of the camera region is out of a reference range, obtaining the camera images for the camera region at a first frame per second (FPS) higher than a second FPS of a region of the frame outside of the camera region. According to an embodiment, the method may comprise, in response to identifying that the data is within the reference range, obtaining the camera images for the camera region at the second FPS.

As described above, a non-transitory computer readable storage medium may store one or more programs 140 including instructions. According to an embodiment, the instructions, when executed by a processor 120 of a wearable device 200 including the camera 310 and the display 330, may be configured such that the wearable device 200 identifies a region of interest (ROI) in the first frame outputted through the display 330 based on user input. According to an embodiment, a camera region included in the first frame may correspond to at least partial region of a first camera image obtained through the camera 310 at a first time point. According to an embodiment, the instructions, when executed by the processor 120, may be configured such that the wearable device 200 controls, based on the ROI overlapping the camera region, the image signal processor 320 to process a second camera image obtained at a second time point after the first time point by a first processing scheme. According to an embodiment, the instructions, when executed by the processor 120, may be configured such that the wearable device 200 controls, based on the ROI being outside of the camera region, the image signal processor 320 to process the second camera image by a second processing scheme that is distinct from the first processing scheme. According to an embodiment, the instructions, when executed by the processor 120, may be configured such that the wearable device 200 displays, through the display 330, a second frame including the camera region corresponding to at least partial region of the processed second camera image.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

While the disclosure has been shown and described with reference to various embodiments thereof, it will be understood by those skilled in the art that various changes in form and details may be made therein without departing from the spirit and scope of the disclosure as defined by the appended claims and their equivalents.

## Claims

1. A wearable device (200) comprising:
a camera (310);
an image signal processor (320);
a display (330);
at least one processor (120) comprising processing circuitry; and
memory (130), comprising one or more storage mediums, storing instructions,
wherein the instructions, when executed by the at least one processor (120) individually or collectively, cause the wearable device (200) to:
based on user input, identify a region of interest (ROI) from a first frame displayed through the display (330), a camera region included in the first frame corresponding to at least partial region of a first camera image obtained through the camera (310) at a first time point,
based on the ROI overlapping the camera region, control the image signal processor to process a second camera image obtained at a second time point after the first time point by a first processing scheme,
based on the ROI being outside of the camera region, control the image signal processor to process the second camera image by a second processing scheme that is distinct from the first processing scheme, and
display, through the display, a second frame including the camera region corresponding to at least partial region of the processed second camera image.

2. The wearable device of claim 1, comprising:
a sensor (176),
wherein the instructions, when executed by the at least one processor (120) individually or collectively, cause the wearable device (200) to:
obtain a gaze of a user identified through the sensor (176) as the user input, and
identify the ROI based on the gaze of the user obtained as the user input.

3. The wearable device of claim 1 or claim 2,
wherein the instructions, when executed by the at least one processor (120) individually or collectively, cause the wearable device (200) to:
in response to identifying that data indicating a change of pixel values of the camera region which is overlapped with the ROI is out of a reference range, control the image signal processor (320) to obtain the second camera image for the camera region at a first frame per second (FPS) higher than a second FPS of another region outside of the camera region of the second frame; and
in response to identifying that the data is within the reference range, control the image signal processor (320) to obtain the second camera image for the camera region at the second FPS.

4. The wearable device of any one of claims 1 to 3,
wherein the instructions, when executed by the at least one processor (120) individually or collectively, cause the wearable device (200) to:
in response to identifying that the data is out of the reference range, control the image signal processor (320) to bypass a post-processing on the second camera image for the camera region obtained at the first FPS.

5. The wearable device of any one of claims 1 to 4,
wherein the instructions, when executed by the at least one processor (120) individually or collectively, cause the wearable device (200) to:
in response to identifying that the data is within the reference range, control the image signal processor (320) to post-process the second camera image for the camera region obtained at the second FPS.

6. The wearable device of any one of claims 1 to 5,
wherein the instructions, when executed by the at least one processor (120) individually or collectively, cause the wearable device (200) to:
based on the ROI being outside of the camera region, control the image signal processor (320) to obtain the second camera image at the second FPS, and bypass the post-processing on the second camera image for the camera region obtained at the second FPS.

7. The wearable device of any one of claims 1 to 6,
wherein the instructions, when executed by the at least one processor (120) individually or collectively, cause the wearable device (200) to:
in response to identifying that brightness of the camera region overlapped with the ROI is more than reference brightness, control the image signal processor (320) to process the second camera image obtained at the second time point after the first time point by the first processing scheme; and
in response to identifying that brightness of the camera region overlapped with the ROI is under reference brightness, control the image signal processor (320) to process the second camera image for the camera region by the second processing scheme.

8. The wearable device of any one of claims 1 to 7,
wherein the instructions, when executed by the at least one processor (120) individually or collectively, cause the wearable device (200) to:
display, on the display (330), the second frame based on an application image obtained by executing an application,
wherein the second frame includes the camera region based on the second camera image and an application region based on the application image, and
wherein the camera region is set based on a previously set camera region indicated by usage information of the application.

9. The wearable device of any one of claims 1 to 8,
wherein the instructions, when executed by the at least one processor (120) individually or collectively, cause the wearable device (200) to:
identify at least one object included in the first camera image;
identify an object of a designated type from the identified at least one object; and
set the camera region based on a region of the object of the designated type.

10. A method executed by a wearable device including a camera (310), and a display (330), the method comprising:
based on user input, identifying a region of interest (ROI) from a first frame displayed through the display (330), a camera region included in the first frame corresponding to at least partial region of a first camera image obtained through the camera (310) at a first time point;
based on the ROI overlapping the camera region, processing a second camera image obtained at a second time point after the first time point by a first processing scheme;
based on the ROI being outside of the camera region, processing the second camera image by a second processing scheme that is distinct from the first processing scheme; and
displaying, through the display, a second frame including the camera region corresponding to at least partial region of the processed second camera image.

11. A wearable device (200) comprising:
a camera (310);
an image signal processor (320);
a display (330);
at least one processor (120) comprising processing circuitry; and
memory (130), comprising one or more storage mediums, storing instructions,
wherein the instructions, when executed by the at least one processor (120) individually or collectively, cause the wearable device (200) to:
display, on the display (330), a first frame, that includes, as a camera region, at least partial region of a first camera image of environment surrounding the wearable device (200) and obtained through the camera (310) at a first time point,
during the first frame being displayed on the display (330), identify the camera region within the first frame corresponding to a region of interest,
in response to identifying that data indicating a change of pixel values of the camera region is out of a reference range, control the image signal processor (320) to obtain camera images for the camera region at a first frame per second (FPS) higher than a second FPS of a region of the first frame outside of the camera region, and
in response to identifying that the data is within the reference range, control the image signal processor (320) to obtain the camera images for the camera region at the second FPS.

12. The wearable device of claim 11,
wherein the instructions, when executed by the at least one processor (120) individually or collectively, cause the wearable device (200) to:
in response to identifying that the data is out of the reference range, control the image signal processor (320) to bypass a post-processing on the camera images for the camera region obtained at the first FPS.

13. The wearable device of claim 11 or claim 12,
wherein the instructions, when executed by the at least one processor (120) individually or collectively, cause the wearable device (200) to:
in response to identifying that the data is within the reference range, control the image signal processor (320) to post-process the camera images obtained at the second FPS.

14. The wearable device of any one of claims 11 to 13, comprising:
a sensor (176),
wherein the instructions, when executed by the at least one processor (120) individually or collectively, cause the wearable device (200) to:
obtain a gaze of a user through the sensor (176) as the user input, and
identify the ROI based on the gaze of the user obtained as the user input.

15. The wearable device of any one of claim 11 or claim 14,
wherein the instructions, when executed by the at least one processor (120) individually or collectively, cause the wearable device (200) to:
in response to identifying that brightness of the camera region is under reference brightness, control the image signal processor (320) to obtain the camera images for the camera region at the second FPS, and bypass the post-processing on the camera images for the camera region obtained at the second FPS.
